Europäisches Patentamt

European Patent Office

Office européen des brevets

(19)

(11) **EP 1 228 480 B1**

(12) **EUROPEAN PATENT SPECIFICATION**

(45) Date of publication and mention
of the grant of the patent:
**25.08.2004 Bulletin 2004/35**

(21) Application number: **99954324.2**

(22) Date of filing: **08.11.1999**

(51) Int Cl.⁷: **G06K 11/18**

(86) International application number:
**PCT/IL1999/000601**

(87) International publication number:
**WO 2001/035329 (17.05.2001 Gazette 2001/20)**

(54) **METHOD FOR DIGITIZING WRITING AND DRAWING WITH ERASING AND/OR POINTING CAPABILITY**

VERFAHREN ZUM DIGITALISIEREN, SCHREIBEN UND ZEICHNEN MIT MÖGLICHKEIT ZUM LÖSCHEN UND/ODER HINWEISEN

PROCEDE PERMETTANT DE NUMERISER UN TEXTE ET UN DESSIN A L'AIDE D'UNE FONCTION D'EFFACEMENT ET/OU DE POINTAGE

(84) Designated Contracting States:
**AT BE CH CY DE DK ES FI FR GB GR IE IT LI LU MC NL PT SE**
Designated Extension States:
**AL LT LV MK RO SI**

(43) Date of publication of application:
**07.08.2002 Bulletin 2002/32**

(73) Proprietor: **Itpen Europe Limited**
**52575 Ramat Gan (IL)**

(72) Inventor: **SHOLEV, Mordehai**
**37830 Amikam (IL)**

(74) Representative: **Flaccus, Rolf-Dieter, Dr.**
**Patentanwalt**
**Bussardweg 10**
**50389 Wesseling (DE)**

(56) References cited:
**EP-A- 0 445 906         EP-A- 0 798 659**
**WO-A-94/18663         FR-A- 2 698 191**
**GB-A- 2 018 427         US-A- 4 991 148**
**US-A- 5 717 168**

- **POUPYREV I ET AL: "VIRTUAL NOTEPAD: HANDWRITING IN IMMERSIVE VR" IEEE VIRTUAL REALITY ANNUAL INTERNATIONAL SYMPOSIUM,US,LOS ALAMITOS, CA: IEEE COMPUTER SOC, vol. CONF. 5, 1998, pages 126-132, XP000799821 ISBN: 0-7803-4782-X**

## Description

### Field of the Invention

The present invention relates to the field of the digitization of writing and drawing. More particularly, the invention relates to a method for acquiring a computerized representation of a trace and/or movements of a selected point, made according to the relative displacement between the tip of an elongated device, e.g., a writing/drawing instrument, and a support, by receiving signals transmitted from two or more aligned points along the device, and calculating the spatial position of the tip.

### Background of the Invention

Computerized graphical representation of manual traces, such as hand-writing and/or drawing, is widely used by artists and designers. Accurate reproduction of lines and figures made by free-hand provides many features to the designer, who can store the original trace, and further process the drawn lines by using software. For example, the original trace can be sketched by hand in black and white, and can be painted or modified later by the designer or by another person, to obtain the final design. In many applications, such computerized reproduction should be sufficiently accurate, so as to capture the original design. In addition, the designer often is used to draw traces with a conventional utensil, and therefore an accurate simulation of the trace made by the movement of its tip is highly desired. Other applications also require erasing capabilities, which provide the designer more flexibility to make modifications in the drawn trace.

A widely used type of a two-dimensional input devices is a "mouse", connected to a workstation. Mice are connected directly to the computer, usually via a cable, or may use wireless data connection. A typical mouse comprises a round ball on its bottom, designed to roll along a desktop or pad near the computer. When the mouse is moved, it provides a signal to the computer which moves the cursor on the monitor of the computer in the same direction. However, this type of mouse only provides data associated with a relative movement, rather than an absolute location and therefore, the continually provides position change information. Furthermore, the shape of the lower surface of a typical mouse is flat and relatively large, making it difficult to use for free-hand writing.

Another widely used type of input devices is a stylus shaped pen (or the like) and tablet device. The tablet, which comprises digitizing means (such as optical means, magnetic induction means or grid) thereon, is connected to the computer, and may further comprise a paper attached to the writing-surface of the tablet. The user moves the pen freely, while providing input to the computer whenever the pen touches the tablet. However, the absolute two-dimensional position provided to the computer by the combination of a stylus shaped pen (or the like) and tablet is confined to the space of the tablet.

Another type of input devices are three-dimensional input devices. U.S. Patent 5,144,594 to Gilchrist describes an acoustic mouse system which controls indications on a two-dimensional (X-Y) surface. It comprises a support for holding three acoustic receivers in a plane and a pen-like device having an acoustic transmitter therein. The three-dimensional (X-Y-Z) location of the pen-like device is determined by the receivers in response to signals from the transmitter. The X-Y location is utilized to locate a cursor on the monitor of the computer and the Z direction location is utilized to change the display, such as controlling the presentation of different windows on the monitor.

U.S. Patent 5,012,049 to Schier describes a position determining apparatus having embodiments providing two-dimensional and three-dimensional position information. The apparatus comprises a pen-sized movable trnnsmitting device and a plurality of receivers, where the transmission is of pulses of laser light. For determining two-dimensional position, the apparatus has three receivers located in a line and the transmitting device has one or two transmitters. For determining three-dimensional (3-D) position, the apparatus has two transmitters and four receivers, three of which are coplanar and the fourth is in a non-coplanar relationship with the other three. However, this apparatus can only measure locations within the space defined by the receivers.

Position determining apparatus are also utilized as position measuring devices. U.S. Patent 3,924,450 to Uchiyama et al describes a device for measuring coordinates of models. It comprises a supersonic transmitter located somewhere on the model and three supersonic receivers located in space. The transmitted signal, when analyzed, provides the location of the transmitter on the model. In one embodiment, two transmitters are placed on a pointing device. The initial location of the point of the device is known with respect to the locations of the transmitters. Thus, the position of the point can be determined from the location of each transmitter. However, this device does not provide hand writing and/or drawing capability.

US Patent 5,51-7,579 to Baron discloses a handwriting recognition apparatus which comprises an input apparatus employing two different sensing techniques to sense handwriting, and a symbol identification apparatus, which receives the output of the input apparatus and provides an output indication of symbols represented by the handwriting. However, the disclosed apparatus does not digitize the trace generated by the handwriting, but rather transforms it into a predetermined symbol. In addition, this apparatus does not have any erasing capabilities.

US Patent 5,717,168 to DeBuisser et al. discloses an instrument for capturing and processing graphical information by using two ultrasound transmitters attached to the instrument and substantially aligned with its tip. Three or more receivers are used to receive ultrasound pulses, transmitted from the instrument and from additional transmitters located on a support on which a trace is made, and to evaluate therefrom the position of the tip on the support. However, the tip of this instrument can not be used for writing on the surface of the support, and therefore the drawn trace is visible only after simulation. In addition, no erasing features are provided by the instrument, and can be done only by software.

UK Patent no. GB 2,018,427 discloses a combination of a stylus with an associate writing tablet. The stylus is being provided with two ultrasonic sound sources situated at different distances from the stylus tip and arranged to alternately emit pulse-shape sound signals which are picked up by at least two microphones arranged at the edge of the writing tablet. However, the distance between the transmitters is relatively close and therefore the accuracy of the drawing might be, in some cases, less than it is required. Furthermore, the stylus can be used only in 2-D.

A sonic digitizer (manufactured by GTCO Calcomp Inc., Columbia MD, USA) which calculates the 3-D coordinates of a pointer is disclosed. The digitizer collects 3-D data which is processed and gathered, so as to build virtual plants. However, this device also does not provide hand writing and/or drawing capability, and cannot be used as a mouse.

All the methods described above have not yet provided satisfactory solutions to the problem of acquiring an accurate computerized graphical representation of a visible trace, made according to the relative movement between the tip of an elongated writing/drawing instrument, and a support, with erasing capabilities.

It is a primary object of the present invention to provide apparatus by means of which an accurate spatial position of a point located on an elongated device can be determined in cooperation with computing means.

It is an object of the present invention to provide an apparatus for acquiring an accurate computerized graphical representation of a real trace, which overcome the drawbacks of the prior art.

It is another object of the present invention to provide an apparatus for acquiring an accurate computerized graphical representation of a real trace, which is easy to use in free-hand.

It is a further object of the present invention to provide an apparatus for acquiring an accurate computerized graphical representation of a real trace, which also provides erasing capabilities.

It is still another object of the present invention to provide an apparatus for acquiring an accurate computerized graphical representation of a real trace, which provides unique attributes of the real trace.

It is yet another object of the present invention to provide an apparatus for acquiring an accurate computerized graphical representation of a real trace, which enables the support, on which the trace is drawn to be in any spatial position.

It is still another object of the present invention to provide an apparatus for acquiring a three-dimensional accurate computerized graphical representation of a real trace, which enables the support, on which the trace is drawn to be convex or concave.

Other objects and advantages of the invention will become apparent as the description proceeds.

## Summary of the Invention

The present invention is directed to a method for determining spatial and/or planar position of a point as defined by claim 1. Two or more transmitters are positioned substantially along a straight line passing through the point, the position of which it is desired to determine. The position is calculated using the position of the two or more transmitters, the distance between them and the distance between the point and one of the transmitters. A method for determining spatial and/or planar position of a point comprising positioning two or more transmitters substantially along a straight line passing through the point, the position of which it is desired to determine, and calculating the position using the position of the two or more transmitters, the distance between them and the distance between the point and one of the transmitters. A graphical representation of one or more intersection points between a straight line and a surface having a known location and orientation is acquired. Transmission is received from two or more aligned transmission points being in any desired spatial orientation, each transmission point being separated from its neighboring point(s) by a first fixed distance. The transmission points are lying substantially along the straight line. The spatial coordinates of at least two transmission points are determined by receiving a signal transmitted from the at least two transmission points in a set of receivers, and the signal is then processed. At least one characteristic point being colinear with the transmission points is determined, and separated from at least one transmission point by a second fixed distance. The spatial coordinates of the characteristic point are calculated using the spatial coordinates of the at least two transmission points and the second fixed distance. The spatial representation of the surface is determined and/or calculated. Whenever the straight line and the surface intersect, the spatial coordinates of the intersect point are calculated. A first graphical representation indicating coincidence between the intersect point and the characteristic point, and a second and different graphical representation indicating lack of coincidence are displayed on a graphical representation of the surface.

The characteristic point may represent the location of a tip of an elongated instrument, the longitudinal axis of which essentially coincides with the calculated straight line. Preferably, whenever there is coincidence between the intersect point and the characteristic point, the instrument is used as a utensil by exploiting the tip for writing/drawing on the surface, a trace being reproduced on a display and/or in a data storage means by the graphical representation according to the relative movement between the tip and the surface. Whenever there is coincidence between the intersect point and the characteristic point, the instrument is used as a utensil by exploiting the tip for erasing from the surface, a portion of a drawn trace which is reproduced on a display and/or in a data storage means by the graphical representation, by removing a corresponding portion from the graphical representation according to the relative movement between the tip and the surface. Preferably, the instrument is used as a utensil by exploiting a combination of a writing/drawing tip at one end of the utensil, and an erasing tip at the opposing end of the utensil. Whenever there is no coincidence between the intersect point and the characteristic point, the instrument is used as a pointer by exploiting the proximal tip for pointing on the surface towards the intersection point, and reproducing the intersection point on a display of the surface by a corresponding graphical representation. While pointing a light beam is directed from the proximal tip towards the intersection point.

According to a preferred embodiment of the invention, each transmission point contains a transmitter, or an antenna, into which power is switched from a distal transmitter. The transmitted signal may be an RF signal, an IR signal or an ultrasonic signal. Preferably, the surface can be moved and/or its orientation can be varied without affecting the acquired representation by performing the following steps:

a) receiving transmissions from two or more transmission points located on the surface and in any desired spatial orientation;
b) calculating the spatial coordinates of each point on the surface in any location and spatial orientation;
c) obtaining information related to any undesired change in the coordinates of the calculated intersect point caused by relative movement and/or relative change in orientation of the surface; and
d) compensating for the undesired change prior to displaying the graphical representation.

Discrimination between writing/drawing and erasing operations of the utensil is obtained by assigning a unique code to the proximal transmission point closest to the writing/drawing tip, a unique code to the distal transmission point closest to the erasing tip. The codes from the proximal and distal transmission points are received and their spatial coordinates are calculated. The utensil is operated in its writing/drawing mode whenever the tip closer to the proximal transmission point coincides with the surface, and in its erasing mode, whenever the tip closer to the distal transmission point coincides with the surface.

Preferably, the proximal tip or the distal tip are used to point toward the surface, so that the displayed graphical representation of the intersect point coincides with another displayed graphical representation of an object. While keeping the proximal tip or the distal tip directed to the intersect point, a predetermined characteristic signal is emitted from one or more transmission points and the characteristic signal is received in the set of receivers and in response, the displayed object is selected. The graphical representation of the selected object can be manipulated by changing the intersection point. Manipulation comprises mouse operations and/or executing a program linked to the selected object.

Preferably, the spatial coordinates of the intersect point are obtained by calculating the cross product between a first vector, extending from a selected transmission point on the surface to another transmission point on the surface, and a second vector extending from the selected transmission point on the surface to the intersect point. The spatial coordinates of the intersect point are obtained by performing the following steps:

a) calculating the projections of the first and of the second fixed distances on a first selected two dimensional plane and obtaining a coordinate which corresponds to one dimension of the first selected plane; and
b) calculating the projections of the first and of the second fixed distances on a second selected two dimensional plane and obtaining the two remaining coordinates which correspond to the dimensions of the second selected plane.

The data received by the set of receivers can also be processed and/or displayed at a remote station, such as a fax machine, a computer or a cellular phone, linked to the set of receivers via a data link. Data can be transferred through the data link over a telephone line and/or a cellular phone system, or via an E-mail system.

Preferably, the handwriting of a specific user operating the writing/drawing utensil can be characterized by performing the following steps:

a) enabling the tip to move along the axis which coincides with the calculated straight line, so that the displacement of the tip corresponds to the force applied by the specific user, against the drawing surface;

b) calculating in real-time, the coordinates of the characteristic point while writing/drawing on the drawing surface; and

c) characterizing the specific user by collecting information related to the force applied by the specific user and/or the angle that is formed between the utensil and the drawing surface, while the specific user is writing/drawing.

Further characterization is carried out by collecting information related to the kinematic attributes of the utensil while the specific user is writing/drawing. The surface further may comprise a calibration point for improving the accuracy of the graphical representation, the coordinates of which are known.

At least one of the aligned transmission points can also be a virtual point represented by at least two transmission points which are not aligned. The spatial coordinates of the virtual point are calculated by receiving signals transmitted from the at least two transmission points by the set of receivers, and processing the signal.

**Brief Description of the Drawings**

The above and other characteristics and advantages of the invention will be better understood through the following illustrative and non-limitative detailed description of preferred embodiments and examples not covered by the invention thereof, with reference to the appended drawings, wherein:

- Figs. 1A to 1D schematically illustrate a system for digitizing writing and drawing, for carrying out a preferred method of the invention;
- Figs. 1E to 1J schematically illustrate the transformation of data provided by the writing utensil being in interaction with a mobile writing surface;
- Fig. 1K schematically illustrates a mobile writing surface having three transmission points;
- Fig. 1L is a flow-chart of the discrimination operation between writing and pointing modes of the writing utensil;
- Fig. 2 schematically illustrates the structure of the writing utensil of Fig. 1A;
- Fig. 3 is a block diagram of a system for digitizing writing and drawing;
- Figs. 4A to 4C schematically illustrate the calculation of the 3-D coordinates of the tip of the writing utensil;
- Fig. 5 schematically illustrates data inputting provided by the writing utensil from different tilt angles while keeping the tip at the same point;
- Figs. 6A to 6C schematically illustrate the determination of the orientation of the writing utensil;
- Fig. 7 schematically illustrates a portable system for digitizing writing and drawing;
- Fig. 8A schematically illustrates the structure of a pressure-sensitive writing utensil;
- Fig. 8B schematically illustrates the two states of a pressure-sensitive writing utensil;
- Fig. 9 schematically illustrates a facsimile/E-mail system utilizing a system for digitizing writing and drawing;
- Figs. 10A to 10C schematically illustrate the structure of an input device used as a pointing instrument from different aspects;
- Figs. 11A to 11D schematically illustrate the structure and the operation of an input system for pointing on a surface;
- Fig. 12 schematically illustrates the implementation of a writing utensil having erasing capability, which employs a conventional pen or pencil;
- Figs. 13A and 13B schematically illustrate the implementation of a writing utensil having erasing capability, which employs a conventional pen or pencil;
- Fig. 14A schematically illustrates the writing/pointing mode of the writing utensil of Fig.2;
- Fig. 14B schematically illustrates the erasing/pointing mode of the writing utensil of Fig. 2; and
- Fig. 14C schematically illustrates operation in the pointing mode of the writing utensil of Fig. 2 using both tips;

**Detailed Description of Preferred Embodiments**

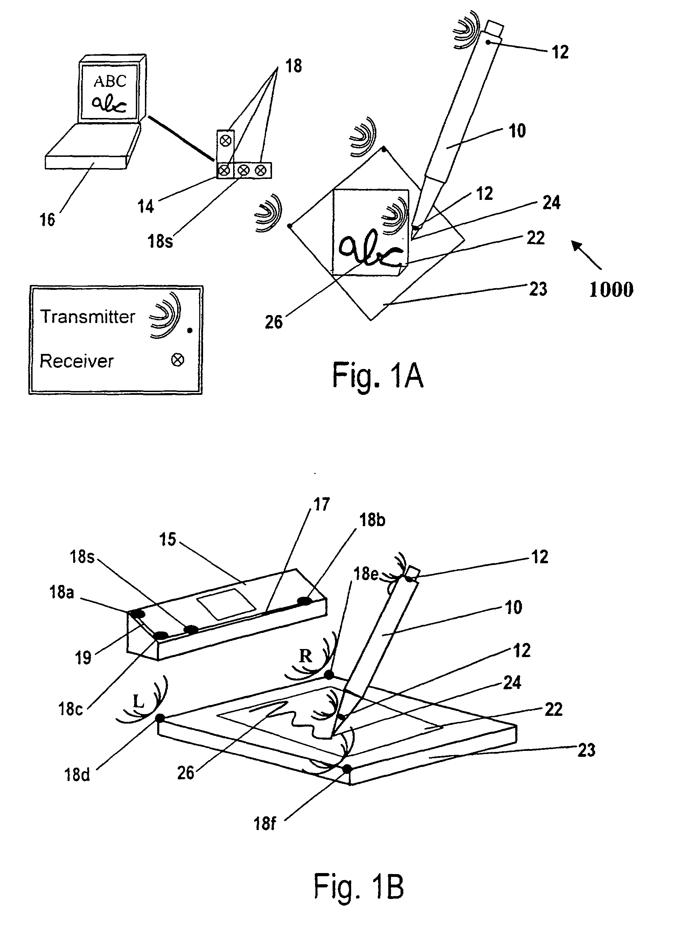

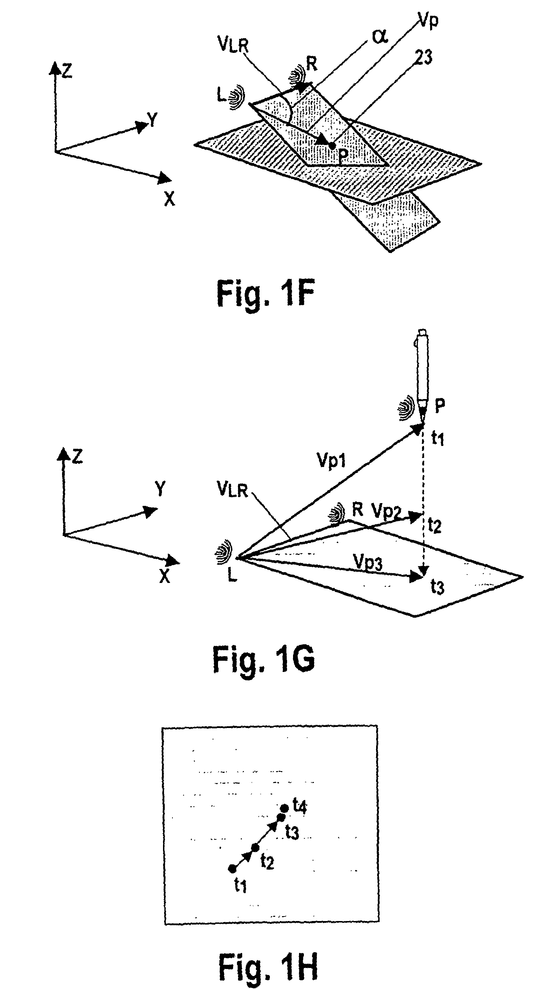

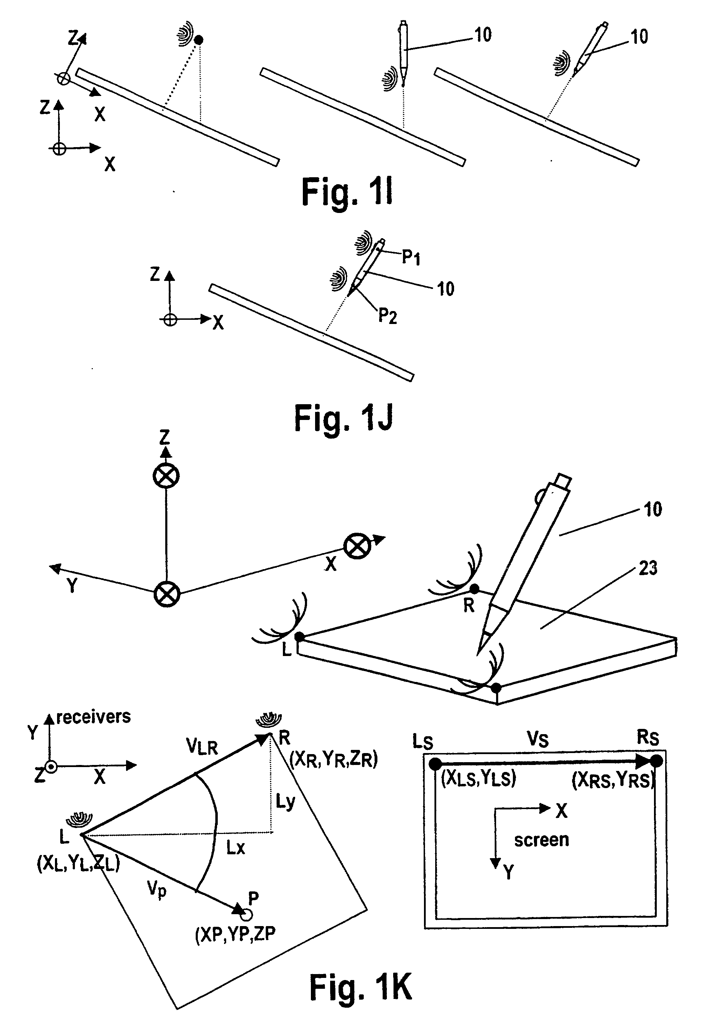

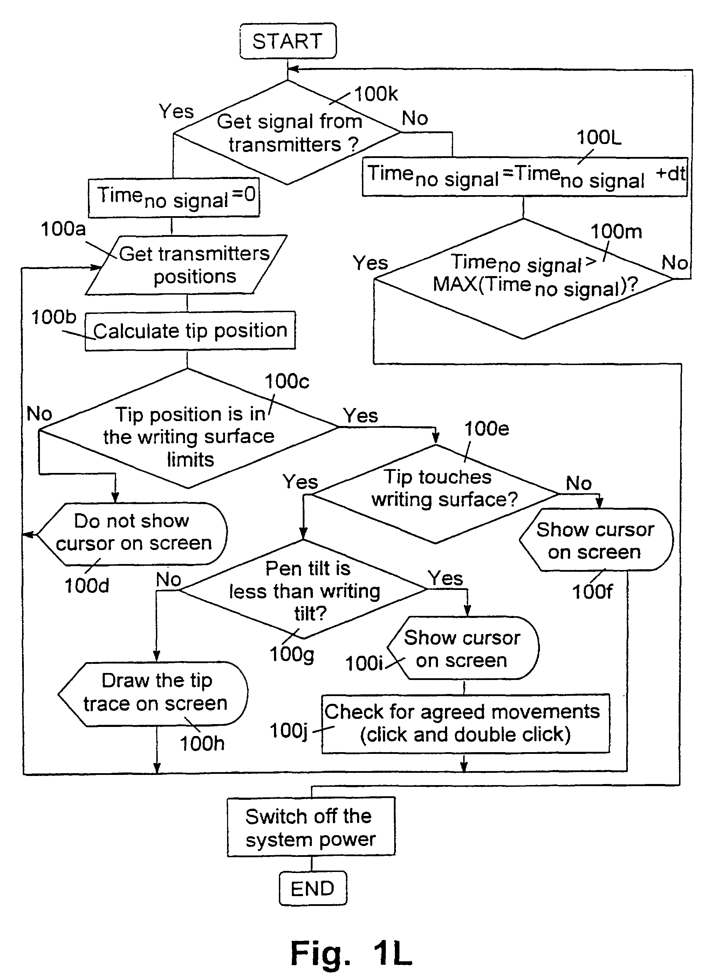

Figs. 1A to 1D schematically illustrate a system for digitizing writing and drawing, for carrying out a preferred method of the invention. The system 1000 comprises an elongated writing utensil 10 to which at least two transmitters 12 are attached. The two transmitters 12 are located along the central line (axis) of the elongated utensil 10 and are essentially aligned with the writing tip of the utensil 10. A position determining system 14 which receives transmitted signals from the transmitters 12 and determines the absolute positions of the transmitters 12, and a data processor 16, such as a computer (as shown, or a Palm cellular-phone with processing capability) or an integrated circuit chip, for processing the position information.

The position determining system 14 typically comprises at least three receivers 18 and a signal processor which converts the time of arrival of signals received from the transmitters 12 into three-dimensional position coordinates (X1,Y1,Z1) and (X2,Y2,Z2) of the two transmitters 12. The processor 16 is connected to the computer 16 by a cable through which the position coordinates are transferred. Alternatively, the collected data can be transmitted using wireless transmission, such as Radio-Frequency (RF) or Infra-Red (IR) data carrying signals. The processor 16 can be implemented in several forms, such as a printed circuit board in the computer, integrated into a cellular phone, etc.

Looking now at Fig. 1B, the three receivers 18 are located on a structure formed of a housing 15 and two connecting lines 17 and 19 which intersect at a right angle. Two receivers, labeled 18a and 18b, are located at the ends of the connecting lines 17 and 19, respectively. The third receiver, labeled 18c, is located on the housing 15 at a position which is the intersection of the connecting lines 17 and 19. A calibration receiver 18s, described in more detail hereinbelow, is also located on the connecting line 17. A suitable type of a position determining system 14 comprising transmitters 12, receivers 18 and a signal processor 20 is the VS-110PRO or the VS100 system, both manufactured by VSCOPE of Israel. Another exemplary system which employs RF signals is the micro-power impulse radar system (time of flight version), developed by Lorens Livermo National Laboratories, USA.

According to a preferred embodiment of the invention, a user writes on a writing medium, such as a piece of paper 22 attached to a writing surface 23, each transmitter 12 continuously transmits signals. The computer (or another suitable data processor) 16 transforms the transmitter coordinates into position coordinates for a writing tip 24 of writing utensil 10; the collection of position coordinates forms the user's "drawing" 26, shown in Fig. 1A. Furthermore, since the writing utensil 10 writes onto a writing medium 22, the user has a "hardcopy" of the drawing 26. For example, if the user wants to store a digital version of his signature, he just signs his signature with the writing utensil 10 on the writing medium 22, as he normally does. While he writes, the system 14 calculates the positions of the writing tip 24, as well as the tilt of the utensil 10 and its kinematic parameters and stores them as the user's signature. Thus, in order to digitize his signature, or any other graphical work, the user just writes on the paper 22. He does not have to view a display of a computer in order to produce his digital signature, as is true of prior art systems. The present invention is thus a writing utensil with an ability to digitally store written graphics. The writing surface 23 may further comprise two (or more) transmitters 18d and 18e, located at the extreme points L and R of the writing surface 23, respectively, as shown in Fig. 1B. This enables to change the position and/or the orientation of the writing surface 23 while drawing. For example, the user can start drawing when the writing surface 23 is placed on a table, and then concurrently walk in the room and continue drawing. The system 14 receives the signals transmitted from transmitters 18d and 18e, as well as from transmitters of the utensil 10, and continuously calculates the relative movement between the utensil 10 and the writing surface 23, while drawing.

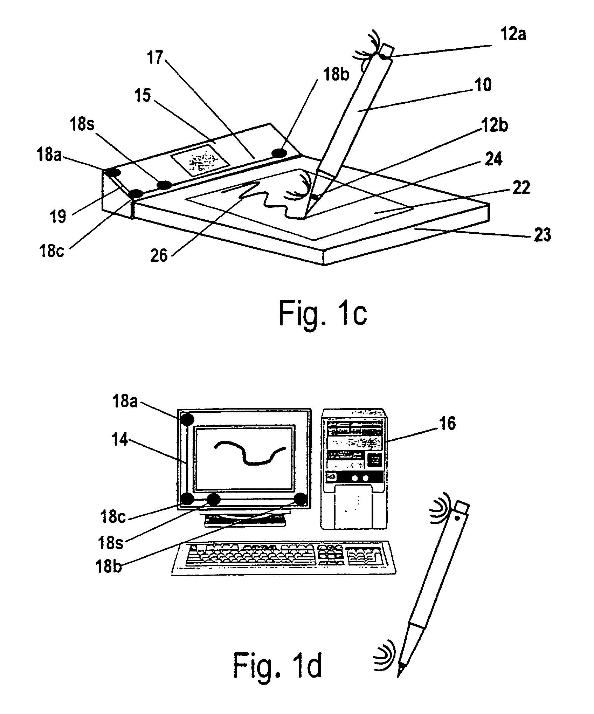

Fig. 1C shows a structure, in which the housing 15 which contains the array of receivers 18a to 18s is fixed to the writing surface 23 (in this example, the receivers 18a to 18s are RF receivers, and the receiver 18s is used for the synchronization required to calculate the timing of the emitted RF signals. If ultrasonic transmission is employed, synchronization can be carried out using a LED which emits IR signals). Using this structure eliminates the need to transmit from points L and R on the writing surface 23. The array of receivers 18a to 18s can be also fixed to the display of the computer 16, as shown in Fig. 1D. In that case, the housing 15 may be implemented as a Printed Circuit Board (PCB) in the computer.

According to a preferred embodiment of the invention, the system only stores the position coordinates of the trace 26 drawn on the paper. Whenever the user raises the writing utensil 10 from the writing surface 23, the system ceases storing position coordinates. It determines the raising of the writing utensil 10 by knowing the three-dimensional location of the writing tip 24 and the spatial location and the orientation of the plane of the writing surface 23 (in this case, both transmitters 12a and 12b are active). Alternatively, only one transmitter can be activated when there is no contact between the writing tip 24 and the surface 23. When the user starts drawing, the applied pressure operates also the second transmitter, which indicates that there is contact and drives the system 14 to calculate the tip location accordingly. The transmitters 12 and receivers 18 can communicate in any suitable manner, such as using ultrasonic, supersonic, light or RF data-carrying signals of any suitable wavelength.

In the event when the writing surface 23 is static (fixed in location) and forms a plane which is parallel to the vertical or to the horizontal plane of the set of receivers18a to 18s, no transmitters are required on the writing surface 23. Alternatively, two reference points can be determined on the writing surface 23, which are sufficient to map (by calculations based on the known location of these two reference points) any drawn point to the display screen, or any point on writing surface 23, to which the tip of the writing utensil 10 is directed, whenever there is no contact between the tip 24 and the writing surface 23 (i.e., during pointing mode). These points are also used to determine the actual limits of the writing surface 23, as well as its orientation relative to the array of receivers.

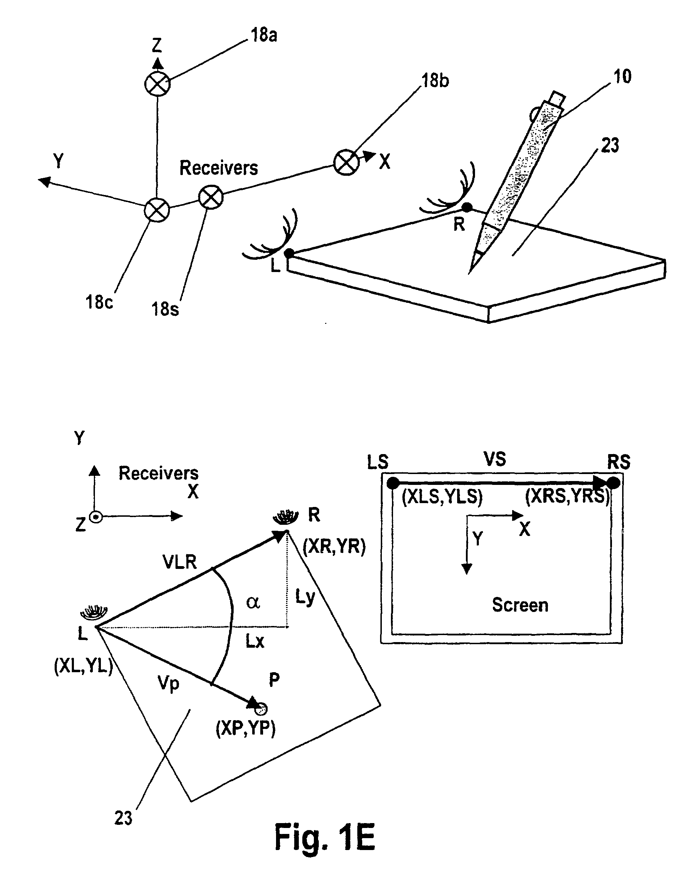

Figs. 1E to 1J schematically illustrate the transformation of data provided by the writing utensil being in interaction with a mobile writing surface, according to a preferred embodiment of the invention. The writing surface 23 comprises two transmission points, L and R, which are received by the same set of receivers 18a to 18s (which receive transmission from the writing utensil). The transmitters located at points L and R provide data related to the movement of the writing surface 23, to the set of receivers. This data is further processed, and provides an indication related to any movement (relative to the set of receivers) of the writing surface 23. This enables the user to move the writing surface 23 to any point before or while drawing. For example, the user can start drawing while sitting near a table, and then move the writing surface on the table while drawing. In the event when the writing surface 23 coincides, or is parallel with the X-Y plane of the set of receivers 18a to 18s (as shown in Fig. 1A) the mapping transformation of a point P in the X,Y,Z spatial coordinate system, into a digitized trace while calculating the orientation of the writing surface 23 relatively to the X,Y,Z spatial coordinate system is carried out by calculating the angle $\alpha$ between the vectors $V_{LR}$ and $V_P$ in Fig. 1E, as follows:

$$\cos\alpha = \frac{(X_P - X_L)\cdot(X_R - X_L) + (Y_P - Y_L)\cdot(Y_R - Y_L)}{|V_P|\cdot|V_{LR}|} \qquad \text{[Eq. 1]}$$

wherein

$$|V_P| = \sqrt{(X_P - X_L)^2 + (Y_R - Y_L)^2} \qquad \text{[Eq. 2]}$$

$$|V_{LR}| = \sqrt{(X_R - X_L)^2 + (Y_R - Y_L)^2} \qquad \text{[Eq. 3]}$$

Mapping to a digitized trace on the display screen is carried out in this example from point Ls to point Ps. The coordinates (Xs, Ys) of the point Ps are calculated using the following sensitivity factor $K_P$ :

$$K_P = \frac{|V_S|}{|V_{LR}|} \qquad \text{[Eq. 4]}$$

$$X_s = K_P \cdot |V_P| \cdot \cos\alpha \qquad \text{[Eq. 5]}$$

and

$$Y_s = K_P \cdot |V_P| \cdot \sin\alpha \qquad \text{[Eq. 6]}$$

wherein $V_S$ is the mapping of the vector $V_{LR}$ to the display screen. $V_S$ represents the length of the display screen, and can be measured by placing the tip in the two extremes of the display, or may be hardware determined. The factor $K_P$ represents the sensitivity of the digitizing system. $K_P = 1$ is an indication that the displacement of the writing utensil 10 on the writing surface 23 is transformed into an identical displacement of the reconstructed tip location on the display screen. The digitizing system is less sensitive for $K_P < 1$ (i.e., the displacement of the writing utensil 10 on the writing surface 23 is transformed into a smaller displacement of the reconstructed tip location on the display screen). Similarly, the digitizing system is more sensitive for $K_P > 1$ (i.e., the displacement of the writing utensil 10 on the writing surface 23 is transformed into a greater displacement of the reconstructed tip location on the display screen).

A situation in which the writing surface 23 does not coincide with the plane defined by the set of receivers 18a to 18s is shown in Fig. IF. While the writing utensil 10 is operated in a drawing mode, the point P represents the point at which the tip 24 is in contact with the writing surface 23, and is defined by calculations of the coordinates of the tip 24. In this case, the vector $V_P$ is calculated using the (known) coordinates of point P and the transmission point L. The vector $V_{LR}$ is calculated using the (known) coordinates of the transmission points L and R. The angle $\alpha$ between the vectors and is calculated as follows:

$$\cos\alpha =$$

$$\frac{(X_P-X_L)\cdot(X_R-X_L)+(Y_P-Y_L)\cdot(Y_R-Y_L)+(Y_P-Y_L)\cdot(Y_R-Y_L)+(Z_P-Z_L)\cdot(Z_R-Z_L)}{|V_P|\cdot|V_{LR}|} \qquad \text{[Eq. 7]}$$

wherein

$$|V_P| = \sqrt{(X_P\text{-}X_L)^2+(Y_P\text{-}Y_L)^2 +(Z_P\text{-}Z_L)^2} \qquad \text{[Eq. 8]}$$

$$|V_{LR}| = \sqrt{(X_R\text{-}X_L)^2 +(Y_R\text{-}Y_L)^2+ (Z_R\text{-}Z_L)^2} \qquad \text{[Eq. 9]}$$

The point P is mapped into a corresponding point on the display screen after the length $|V_P|$ is obtained. Therefore, the user can draw a trace on a writing surface 23 which coincides with any plane and comprises two transmission points L and R, even when the writing surface 23 is moving in the 3-D space.

When the tip 24 of the writing utensil 10 is not in contact with the writing surface 23, the point P represents a (known) transmission point of the writing utensil, which is closer to the writing surface 23 (i.e., point P is not on the writing surface 23 and the writing utensil functions as a pointer), the vector $V_P$ that is calculated using the coordinates of point P does not coincide with the plane of writing surface 23. The length of the vector $V_P$, as well as the angle $\alpha$ between the vectors $V_{P1}$ to $V_{Pn}$ and $V_{RL}$ vary (reduced) while moving the writing utensil 10 toward, and perpendicular to, the writing surface 23. Therefore, the location of the transformed point on the display screen varies, as shown in Figs. 1F to 1H. If the writing surface 23 is stationary with respect to the set of receivers, a calibration point P is obtained on the writing surface 23 by attaching the tip 24 to the writing surface 23 at least once. The plane of the writing surface 23 can be defined by multiplying the vectors $V_{RL}$ and $V_{LC}$ (which is the vector defined between the transmission point L and the calibration point C). Therefore, the transformation of any point on the writing surface 23, on which the writing utensil 10 points (while operating as a pointer) can be either obtained along a line which passes through the known transmission points, and is perpendicular to the plane being horizontal to the plane that is defined by the set of receivers, or alternatively, to the writing surface 23, as shown in Fig. 1I. If the two transmitters 12a and 12b are continuously operated at points $P_1$ and $P_2$, when the utensil is operated as a pointer, respectively, along the central axis of the writing utensil, the location of the "pointer" on the display screen can be obtained by calculating equation of the line connecting between points $P_1$ and $P_2$, calculating the equation of plane defined by the writing surface 23, and finally calculating their intersection point, as shown in Fig. 1J.

Fig. 1K schematically illustrates a mobile writing surface having three transmission points, according to a preferred embodiment of the invention. The calculations of the relative position between the writing utensil 10 and the writing surface 23 is similar to those of a mobile writing surface having two transmission points (Fig. IE), but for 3-D representation between the vectors $V_P$ and $V_{RL}$. Hence, the point $P(Y_P, Y_P, Z_P)$ on the writing surface 23 is mapped into point $P_S(X_S, Y_S)$ on the plane of the display screen as follows:

$$\cos\alpha =$$

$$\frac{(X_P\text{-}X_L)\cdot(X_R\text{-}X_L)+ (Y_P\text{-}Y_L)\cdot(Y_R\text{-}Y_L)+(Y_P\text{-}Y_L)\cdot(Y_R\text{-}Y_L)+(Z_P\text{-}Z_L)\cdot(Z_R\text{-}Z_L)}{|V_P|\cdot|V_{LR}|}$$

wherein

$$|V_P| = \sqrt{(X_P\text{-} X_L)^2+ (Y_P\text{-} Y_L)^2 + (Z_P\text{-}Z_L)^2} \qquad \text{[Eq. 10]}$$

$$|V_{LR}| = \sqrt{(X_R\text{-} X_L)^2+ (Y_R\text{-}Y_L)^2+(Z_R\text{-}Z_L)^2} \qquad \text{[Eq. 11]}$$

$$K_P = \frac{|V_S|}{|V_{LR}|} \qquad \text{[Eq. 12]}$$

$$X_s = K_P\cdot |V_P|\cdot\cos\alpha \qquad \text{[Eq. 13]}$$

and

$$Y_S = K_P\cdot |V_P|\cdot\sin\alpha \qquad \text{[Eq. 14]}$$

Fig. 1L is a flow-chart of the discrimination operation between writing and pointing modes of a writing utensil which has no switches, according to a preferred embodiment of the invention. Such utensil may be for example, a real pencil on which three transmitters are located. In order to save power, at the first step 100k the system checks if there is a signal which is received from the transmitters. If no, at the next step 1001 the time lapses with no signal from the transmitters is accumulated. At the next step 100m, the system checks if the accumulated time exceeds a predetermined limit. If not yet, the system continues to expect for transmission. If yes, at the final step the power supply to the system is switched off.

If a transmitted signal is received, at the next step 100a, the 3-D coordinates of the transmission points along the writing utensil 10 are obtained. At the next step 100b, the location of the writing tip 24 is calculated using these the 3-D coordinates. At the next step 100c the digitizing system checks if the tip 24 is above (confined within the limits of the "box" defined by virtually moving the writing surface 23 up, along the Z axis) the writing surface 23. Of course, the user can draw a trace and/or point on both sides of the writing surface 23 (the array of receivers detects the orientation of the writing utensil 10). If no (i.e., the writing utensil is relatively far away from the writing surface 23), at the next step 100d no pointer is displayed on the display screen. If yes, at the next step 100e the digitizing system checks if the calculated coordinates of the tip 24 coincides with the writing surface 23 (i.e., the tip 24 "touches" the writing surface). If no, at the next step 100f a pointer is displayed on the display screen. If yes, at the next step 100g the digitizing system checks if the writing utensil 10 is inclined relatively to the writing surface 23 in an angle which is smaller than a predetermined "normal" writing angle. If the angle is larger, at the next step 100h a digitized trace is displayed on the display screen. If the angle is smaller, at the next step 100i the writing utensil 10 operates as a pointing device and a corresponding pointer is displayed on the display screen. At the next step 100j, the digitizing system seeks a single or a double emission from the transmitters of the writing utensil, which simulates a mouse "clicking" operations.

According to a preferred embodiment of the invention, the digitizing system is used to reconstruct and/or to stores the position coordinates of a 3-D drawn trace. In some applications, the drawing surface is not flat (ie., a convex or concave surface, or a combination thereof), and therefore the writing tip 24 moves in three dimensions while drawing (the same happens while erasing). Since the 3-D coordinates of the writing tip 24 are continuously calculated, by aggregating and storing the collected 3-D data, the digitizing system can simulate the shape of the writing surface, and display a 3-D reconstructed trace on the display screen. The accuracy of the 3-D reconstructed trace is continuously improved as further 3-D data is collected while drawing.

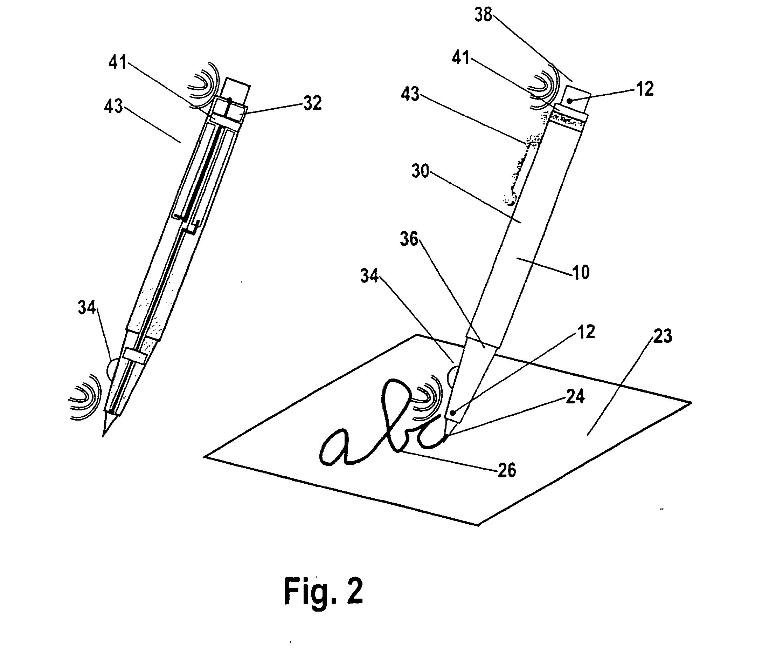

Fig. 2 schematically illustrates the structure of the writing utensil of Fig. 1A which can be conveniently used in carrying out the present invention, but is not part of it and is not claimed herein. The writing utensil 10 comprises a body 30 generally having the shape of a typical writing utensil, at least two transmitters 12 aligned along the central axis of the utensil 10 and coincide with its tip 24, circuitry 32 for powering and controlling the transmitters 12, at least one optional indicator button (one is shown) 34 and a removable writing head 36. If desired, the writing utensil 10 can also include an eraser 38 for erasing some or all of the drawing 26. The optional indicator button 34 controls, the transmission from a single transmitter 12. Typically, when a button 34 is pressed; transmission is allowed from the selected transmitter. The button 34 may be connected in parallel to the pressure-sensitive switch, so as to enable activation of both transmitters even when there is no contact between the tip and the writing surface (e.g., at pointing mode). Otherwise, transmission is disabled from that transmitter.The writing head 36 may comprise a graphite writing tip, which functions as a pencil, or an ink writing tip, which functions as a pen. The writing head 36 is typically connected to the body 30 by using any suitable connection, such as screws or snap connectors. When the writing utensil is in a writing/drawing position (i.e., when the writing tip 24 points toward the writing surface 23), a pressure-sensitive switch is operated at the moment when the tip is in contact with the writing surface 23. The mechanical pressure provides an indication that the user wishes to draw a trace, and causes both transmissions 12 to transmit and provide the data required to determine the location of the writing tip 24. Whenever the user wishes to terminate the drawing state, he removes the tip from the writing surface 23 and the transmission from at least one transmitter 12 is stopped. Normally, in the pointing mode the farther (from the writing surface) transmitter is disactivated, and the utensil 10 is operates as a pointing instrument while only the closer transmitter is active.

When the user wishes to operate the utensil 10 as an eraser (i.e., to digitize erasing operation and to implement it on the digitized drawn trace), he reverses the orientation of the utensil 10 to point toward the writing surface 23, this time with the eraser (i.e., the normally farther transmitter is now closer to the writing surface 23), and operates a mode selector 43 (which is actually another switch, implemented by using the grip of the utensil) that switches the pointing direction. The mode selector terminates transmission from the transmitter located near the writing tip, and initiates transmission from the transmitter located near the erasing tip. When the user applies pressure on the erasing tip (against the writing surface), the other transmitter which is closer to the writing/drawing tip is also activated, and the location of the erasing tip on the writing surface is calculated according to transmission from both transmitters. The radius of the erased area is determined by the angle between the writing utensil and the drawing surface (which can also be calculated when both transmitters are activated). The maximal erased area is obtained when the angle is a right angle. The writing utensil 10 further comprises a main power switch 41, which is used to connect or to disconnect the power supply to each transmitter 12, whenever the utensil is not in use.

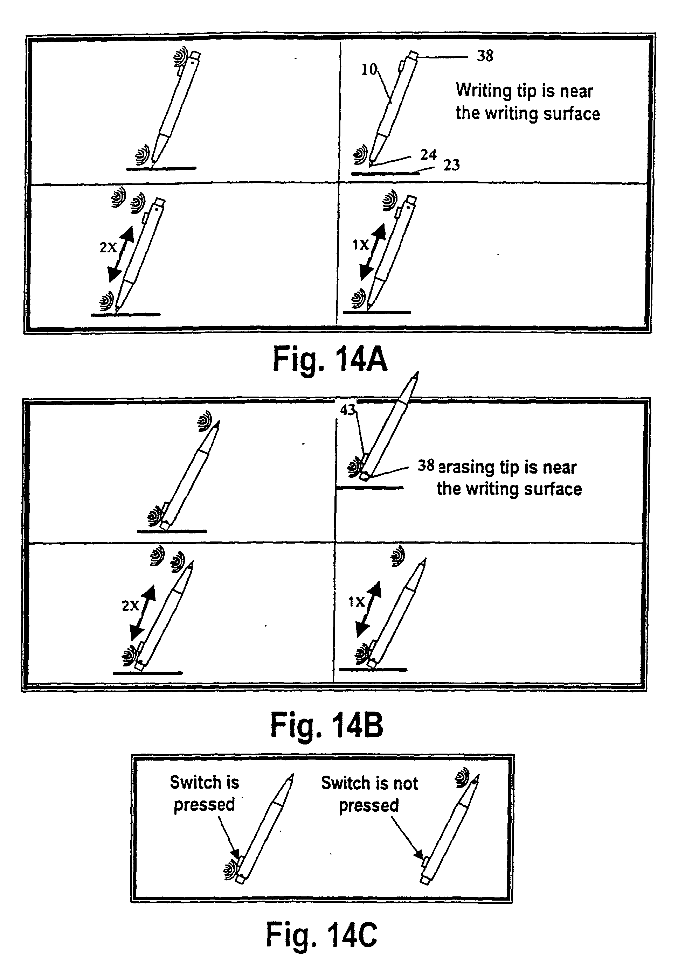

Fig. 14A schematically illustrates the writing/pointing mode of the writing utensil of Fig. 2, according to a preferred embodiment of the invention. As long as the writing tip points toward the writing surface 23, only the normally lower (the closer) transmitter transmits, and the utensil 10 functions as a 3-D cursor, which approximately simulates the location of the writing tip 24 above the writing surface 23. A closer location of the writing tip 24 to the writing surface 23 results in more accurate simulation of the actual tip location. When the user starts to draw the trace, he brings the writing tip 24 into contact with the writing surface 23 and applies a continuous pressure, which causes both transmitters to transmit simultaneously. As a result, the drawn trace is accurately digitized and displayed on screen.

Fig. 14B schematically illustrates the erasing/pointing mode of the writing utensil of Fig. 2, according to a preferred embodiment of the invention. As long as the eraser 38 points toward the writing surface 23, only the normally upper (the farther) transmitter transmits, and the utensil 10 functions as a 3-D cursor, which approximately simulates the location of the eraser 38 above the writing surface 23. Switching the transmission to the transmitter which is closer to the erasing tip can be carried out manually by the mode selector 43, or automatically, by a switching unit that is responsive to the gravitation force. A closer location of the writing eraser 38 to the writing surface 23 results in more accurate simulation of the actual eraser location. When the user starts to erase the drawn trace, he brings the eraser 38 into contact with the writing surface 23 and applies a continuous pressure, which causes both transmitters to transmit simultaneously. As a result, the drawn trace is accurately digitized and displayed on screen. The mode selector 43 switches the location (upper or lower) of the currently operating transmitter, in both writing or erasing modes. Normally, when the mode selector 43 is depressed, the transmitter which is closer to the erasing tip is activated, and when released, transmission is switched to the transmitter which is closer to the writing tip.

According to a preferred embodiment of the invention, the writing utensil 10 is operated as a selection and/ or an executing device, which simulated the operation of a widely used "mouse". The user can bring the writing tip 24 to be in contact with the writing surface 23, and point with the tip on a drawn object. The user can then "select" an object by depressing the writing utensil 10 once against the writing surface 23, followed by a release (i.e., "clicking" on the pointed object). A resulting single pulse is received by the set of receivers from the farther transmitter, and the selected object can be manipulated by the writing utensil 10. For example, the "selected" object can be "dragged" on the display screen by the user. In addition, an object may be associated with execution program, and the user can operate the program by depressing the writing utensil 10 against the writing surface 23 twice, followed by a release (i. e., "double clicking" on the pointed object), as shown in Fig. 14A above. In both conditions, the writing utensil is controlled to disable writing or drawing. Similar "clicking" and or "double clicking" operations can be obtained when the eraser 38 is closer to the writing surface 23 and when the mode selector 43 is depressed, as shown in Fig. 14A above. Whenever desired, a single transmitter can be selected and activated by switching the state of a selection switch, which is located near the erasing tip of the writing utensil 10. This enables the user to operate the writing utensil 10 as a pointing device at each orientation of the writing tip or the erasing tip, as shown in Fig. 14C.

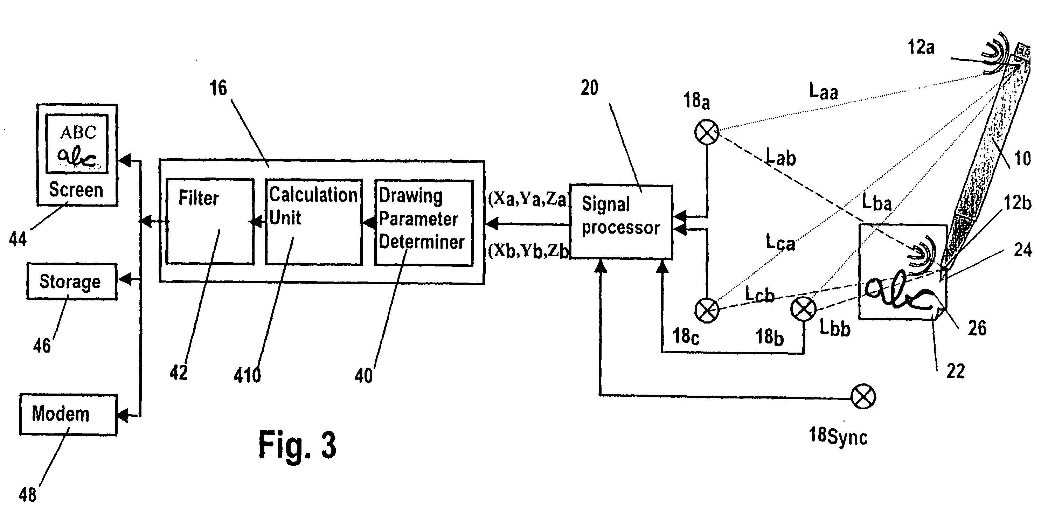

Fig. 3 is a block diagram of a system for digitizing writing and drawing. Each of the receivers 18a to 18s receives the output of transmitters, labeled 12a and 12b, and provides the output to the signal processor 20 which determines therefrom the three-dimensional location coordinates $(Xa, Ya, Za)$ and $(Xb, Yb, Zb)$ of transmitters 12a and 12b, respectively. The coordinate values are provided to the data processor 16 which comprises a drawing parameter determiner 40 for determining at least the location status of the tip 24, calculation unit 410 which calculates the location of the tip, and an optional filter 42, such as a low pass filter, for filtering out undesired movement of the writing tip 24 (considered as "noise"). The output of the data processor 16 can be provided to any suitable device, such as to a display screen 44 and/or a storage device 46, and/or a modem for further processing. Each receiver from the group 18a to 18s is characterized with a pair of distances, $<laa, lab>$ to $<lca, lcb>$, respectively, from each transmitter.

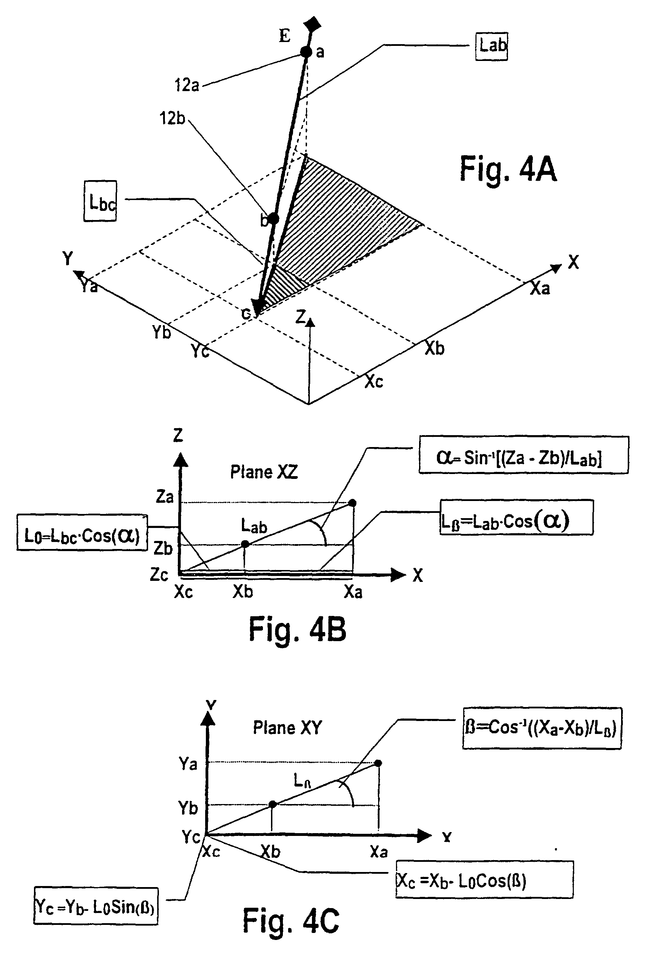

Figs. 4A to 4C schematically illustrate the calculation of the 3-D coordinates of the tip of the writing utensil, according to a preferred embodiment of the invention. The drawing parameter determiner 40 checks which transmitter is currently active and its current position, and calculates the coordinates $(Xc, Yc, Zc)$ of tip 24 from the coordinate values $(Xa, Ya, Za)$ and $(Xb, Yb, Zb)$ which are determined by the set of receivers 18a to 18c. The distance between the two transmitters 12a and 12b is Lab and the distance between transmitter 12b and the tip 24 (point c) is $Lbc$. The transmitters 12a and 12b and the tip 24 are collinear, and coincide with the central axis of the utensil 10. The drawing parameter determiner 40 first determines the tilt angle $\alpha$ which is formed between the central axis of the writing utensil 10 and the X-Z plane. It is determined by Equation 1 hereinbelow and is illustrated in Fig. 4B:

$$\alpha = \operatorname{Sin}^{-1}[(Za - Zb)/L_{ab}] \qquad \text{[Eq. 15]}$$

Assuming that in this example the utensil 10 is always above the writing surface 23, the calculation unit 410 calculates (using the tilt angle $\alpha$) the height coordinate $Zc$ of the tip 24, the length $L\beta$ of the projection of the distance Lab on the X-Y plane and the length L0 of the projection of the distance L*bc* on the X-Y plane as follows:

$$Zc = Zb - L_{bc}\sin(\alpha) \qquad \text{[Eq. 16]}$$

$$L_\beta = L_{ab}\cos(\alpha) \qquad \text{[Eq. 17]}$$

$$L_0 = L_{bc} \cdot Cos(\alpha) \qquad \text{[Eq. 18]}$$

The calculation unit 410 calculates (using the calculated angle $\beta$ and the projection $L_\beta$) the coordinates X*c* and Y*c* of the tip 24, in the X-Y plane as follows and as shown in Fig. 4C:

$$\beta = Cos^{-1}[(X_a - X_b)/L_\beta] \qquad \text{[Eq. 19]}$$

The value of $\beta$ is also a function of the coordinate quadrant in which the coordinates are located. Thus, the values of Y*a* and Y*b* are needed to determine the value of $\beta$. Finally, the X*c* and Y*c* coordinates of the tip 24 are calculated using the angle $\beta$ as follows:

$$X_c = X_b - L_0 Cos(\beta) \qquad \text{[Eq. 20]}$$

$$Y_c = Y_b - L_0 Sin(\beta) \qquad \text{[Eq. 21]}$$

Both transmitters 12a and 12b determine a straight line and, any point along that line can be calculated. Thus, using calculations similar to those detailed hereinabove, the drawing parameter determiner 40 can also determine the location $(X_E, Y_E, Z_E)$ of eraser 38 which is located at a distance $L_{aE}$ from transmitter 12a. Whenever the drawing parameter determiner 40 indicates that the eraser 38 is touching the writing surface 23 (i.e. when transmitter 12a is closer to the writing surface than transmitter 12b or when eraser 38 activates a switch (not shown)), the calculated data points are stored in a different array. Whenever desired, they are used to remove from screen, those stored data-points which are near the locations of the eraser 38. The coordinates of the eraser 38 can also be filtered by the filter 42, so as to remove noise effects.

The locations of the writing tip 24 and eraser 38 and the angles $\alpha$ and $\beta$, which provide orientation information, can be utilized as the basis for further applications. For example, the writing utensil 10 can be used to as a data input device for drawings, handwritten manuscripts and signatures. It can be used to fill in forms, if handwriting is required. It can also form part of a facsimile system, where the digitized trace can be processed and transmitted over a telephone line as a compressed image (normally used to transfer fax messages) to a receiving fax machine. The processing and transmission can be carried out in real-time, so as to enable a user at the receiving point to obtain the drawn trace on his screen display. Of course, the digitized trace can be delivered to remote receiving points using other E-mail channels and/or wireless communication devices, such as cellular phones.

The system 1000 can further be used as a graphological tool, to identify the user by his handwriting and for character recognition. For this purpose, when a user signs his signature, data related to both the signature itself (the locations of the writing tip) and to the movement of his hand (the tilt of the writing utensil 10 while writing) is collected. Additional parameters, such as the kinematic properties of the hand movement can also be used to characterize the user. For example, the linear velocity of the writing tip, its direction relative to the trace, angular velocity, linear and/or angular acceleration, and dynamic parameters which can be analyzed and used to characterized the user. The (combined) collected information is then utilized to analyze the produced signature, either for graphological analysis and/or to identify the signer. This combination also provides sufficient information to recognize characters since the hand motions required to produce a letter (or any other character/symbol) can be often defined in the same level of accuracy as the characters themselves. Both recognition methods can be used together and significantly reduce handwriting recognition errors. This technique is described in more details, for example in the article "Trajectory Formation and Handwriting: A Computational Model" by Morasso and Ivaldi, Biological Cybernetics, Springer-Verlag, 1982, pp. 131 - 142.

According to another preferred embodiment of the invention, the digitizing accuracy can be further improved by calculating, in real-time, the actual (current) length $l_{bc}$ of the writing utensil 10. Such calculation is required in particular when the physical length $l_{bc}$ is slightly changed while the writing utensil 10 is in use (e.g., when the writing tip is a pencil, which is slightly shortened during relatively long use, or when the pencil is sharpened). Looking again at Figs. 4A and 4B above, at a given time $t_0$, the coordinates of the points A(Xa,Ya,Za), B(Xb,Yb,Zb) along the writing utensil 10 are known (the location of the transmitters 12a and 12b, respectively), the actual (current) length $l_{bc}$ can be determined by calculating the coordinates of point C(Xc,Yc,Zc).

Using the geometric properties between the triangles of Fig. 4C, the following relations are determined:

$$\frac{Xa\text{-}Xc}{Xb\text{-}Xc} = \frac{Ya\text{-}Yc}{Yb\text{-}Yc} = \frac{Za\text{-}Zc}{Zb\text{-}Zc} \qquad \text{[Eq. 22]}$$

By isolating only the X and Y components, the relationship is reduced to:

$$\frac{Xa\text{-}Xc}{Xb\text{-}Xc} = \frac{Ya\text{-}Yc}{Yb\text{-}Yc} \qquad \text{[Eq. 23]}$$

therefore:

$$(Xa\text{-}Xc)\cdot(Yb\text{-}Yc) = (Xb\text{-}Xc)\cdot(Ya\text{-}Yc) \qquad \text{[Eq. 24]}$$

After rearranging, the following equation is obtained:

$$(Ya\text{-}Yb)Xc + (Xb\text{-}Xa)Yc = XbYa\text{-}XaYb \qquad \text{[Eq. 25]}$$

The same calculation can be done at a different moment $t_1$, this time with a different tilt angle, while the tip of writing utensil remains at point C (i.e., without moving the tip). As a result, the values *Xa, Ya, Xb* and *Yb* are changed to *X'a, Y'a, X'b* and *Y'b*, respectively, and a similar equation is obtained for the new tilt angle:

$$(Y'a\text{-}Y'b)Xc + (X'b\text{-}X'a)\ Yc = X'b\ Y'a\text{-}X'aY'b \qquad \text{[Eq. 26]}$$

Therefore, the desired values *Xc* and *Yc* are obtained from the set of equations 7d and 7e. The last value *Zc* is calculated from the following relationship:

$$\frac{Ya\ \text{-}\ Yc}{Yb\text{-}Yc} = \frac{Za\text{-}\ Zc}{Zb\text{-}Zc} \qquad \text{[Eq. 27]}$$

Finally, the desired length $l_{bc}$, which is the distance between points B and C is given by:

$$l_{bc} = \sqrt{(Xc\text{-}Xb)^2 + (Yc\text{-}Yb)^2 + (Zc\text{-}Zb)^2} \qquad \text{[Eq. 28]}$$

By repeating this calculation several times, the measured length $l_{bc}$ can be averaged, and the system accuracy can be estimated using statistical analysis.

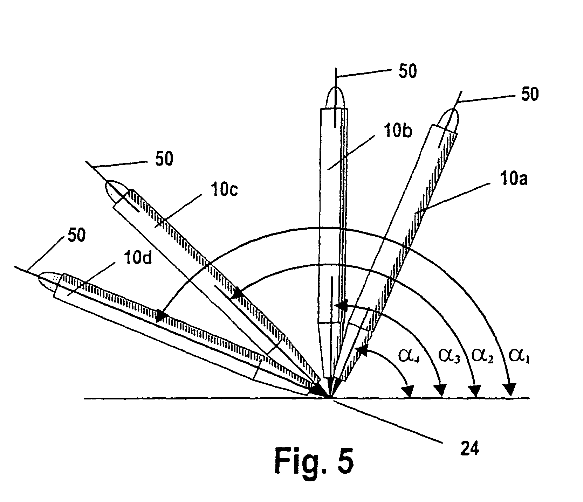

Fig. 5 schematically illustrates data inputting from the writing utensil from different tilt angles, according to a preferred embodiment of the invention. The same 3-D coordinates of the tip 24 are obtained from any tilt angle, since the writing tip 24 continues to direct toward the same point on the writing surface 23. Four input devices (writing utensils), labeled 10a - 10d, each having a different tilt angle $\alpha_i$ and direction $\beta_i$, wherein i=1,..,4 (the angles $\beta_i$ are not shown). Although it may be easy to counterfeit the shape of a hand-written trace, such as a signature, the counterfeiter is not likely to hold and/or to move his hand while writing essentially in the same typical angles, velocities and acceleration while drawing the same trace as drawn by the original signer.

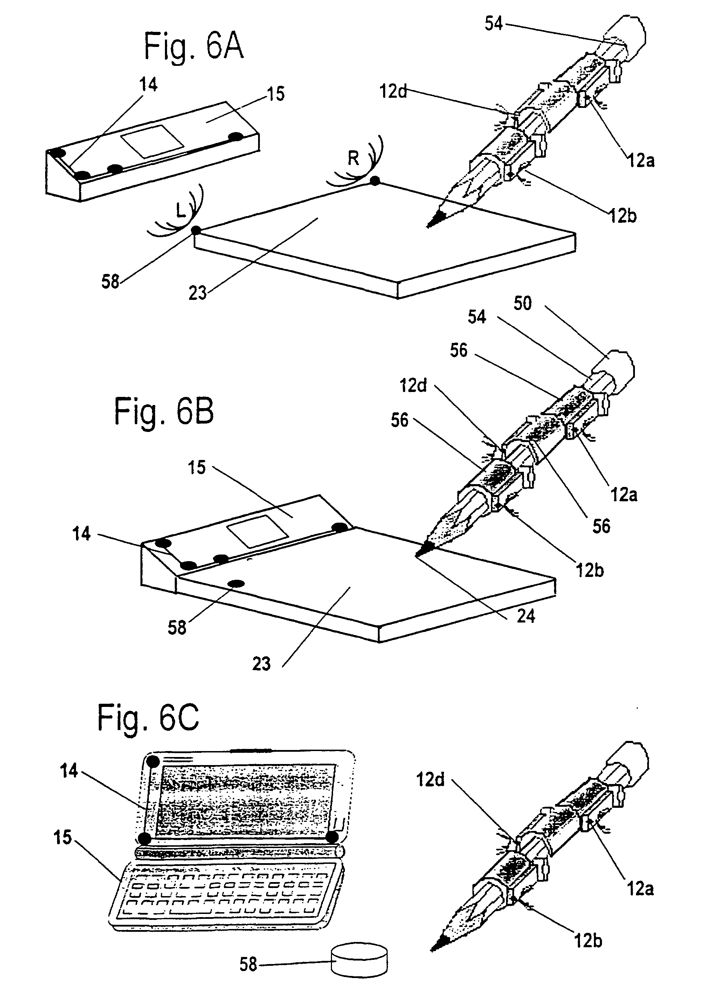

Figs. 6A to 6C schematically illustrate using a calibration process of the location of writing tip relative to the closest transmission point, according to a preferred embodiment of the invention. In this example, the writing utensil is a standard writing instrument 54 having three transmitters 12 attached thereto. Each transmitter 12 is attached to the writing instrument 54 via a clip 56. The transmitters 12 can be placed in any coplanar arrangement, at any desired locations, on the writing instrument 54. The three transmitters 12 define a plane and the orientation of the plane. The position of the writing tip 24 can be determined using conventional vectoric calculations.

Since the transmitters 12 can be located anywhere along the writing instrument 54, the location of the writing tip 24 is not immediately known, nor are the distances Lbc, Lab, Lae, and L3, where L3 is the distance between the second and third transmitter and the remaining distances are as described hereinabove. In order to determine these relationships, the calibration button (e.g., a wireless transmitter) 58, is utilized. During the calibration process when the writing tip 24 (of instrument 54) touches the calibration button 58, the position of each transmitter (from the three transmitters) is measured. The location of the calibration button 58 is also measured, and the distance from each transmitter to the calibration button 58 is calculated. While using the writing instrument, the location of the writing tip is obtained by calculating the vectorial product between two adjacent vectors on this plane (each vector is defined by two transmission points, where one transmission point is common to the adjacent vectors). The location of the writing tip is then obtained by calculating the intersection point of the three distances that was measured in the calibration procedure, i.e., the three distances between the tip and each transmitter. Whenever the length of the writing instrument 54 changes, such as after sharpening of tip 24, or when the location of one or more transmitters 12 is changed, a new calibration is performed, so as to re-determine the distance of the writing drawing tip 24 from the transmitters 12a, 12b and 12d. The calibration button 58 may be a selected transmitter attached to the movable writing surface 23, as shown in Fig. 6A (where transmitter L is selected), or may be a point having known coordinates relative to the set of receivers, as shown in Fig. 6B, or out of the writing surface 23 on a transmitter, the coordinates of which are known, wherein calibration is obtained by using a transmitter with known location relative to the set of receivers, as shown in Fig. 6C.

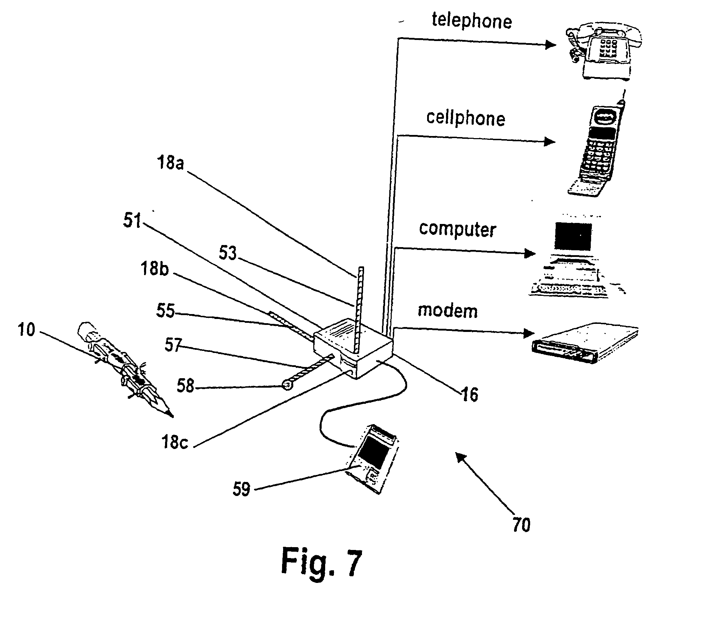

Fig. 7 schematically illustrates a portable system for digitizing writing and drawing. The portable system 70 comprises a writing utensil 10 and a housing 51 storing the position determining system and the data processor 16. In this embodiment, spokes 17 and 19 are replaced by telescopic spokes 53 and 55 extending out of the housing 51. As in the previous embodiments, telescopic spokes 53 and 55 have receivers 18a and 18b, respectively. The third receiver 18c is located on the housing 51 at a position, which is the intersection of the spokes 53 and 55. If desired, the calibration button 58 can be included, on a rigid spoke 57 (calibration is not required when conventional utensil is used, since its physical dimensions are fixed). Alternatively, the connection between the calibration button 58 and the housing 51 can be wireless. An optional display 59, such as a liquid crystal display (LCD) can also be included for monitoring the digitized trace on screen. The housing 51 typically encloses an integrated circuit chip (not shown) which implements the data processor 16 and the signal processor 20. The housing 51 can also enclose a storage unit (not shown), an optional modem, and a connection to a computer. Connection to remote processing and display units may also be provided by using a cellular phone. The digitized data, from which the drawn trace can be reproduced can be transmitted over a telephone line and/or a cellular phone communication channel via the optional modem to a remote workstation, on which the digitized data is displayed. Alternatively, or in addition, the digitized data can be directly (or after compression) transmitted to a remote fax machine which generates a print out of the digitized trace.

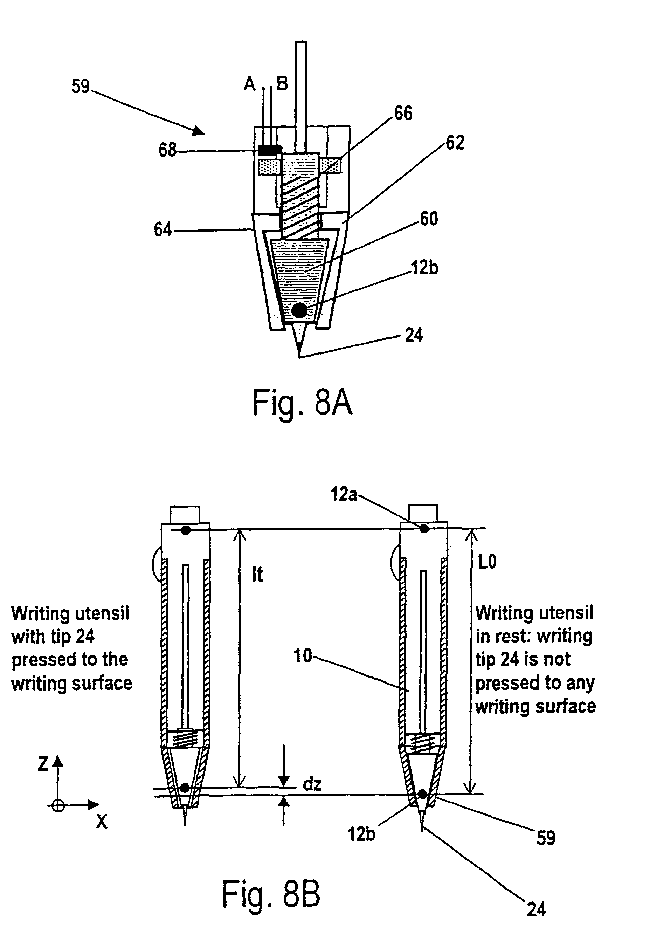

Fig. 8A schematically illustrates the structure of a pressure-sensitive writing utensil. The writing utensil 59 typically comprises a movable writing head 60 having a writing tip 24 as in the previous embodiment and which can slide within a borehole 62 of the utensil's body 64. Within the borehole 62 there is a spring 66 which resists to the movement of the writing head 60 into the borehole 62, by applying a contrary mechanical force. The extent of the contraction of the spring 66 is determined, as described in detail hereinbelow, and is utilized by the drawing parameter determiner 40 to determine the pressure applied by the user while (drawing and) pressing the writing utensil 59. The writing head 60 and body 64 may further include contacts 68 for indicating when writing has commenced. When writing head 60 slides slightly into borehole 62, contact 68 closes an electric circuitry, thereby indicating that writing has commenced. The transmitter which is currently closer to the writing surface 23 is continuously activated and functions as a pointer on the surface. When the contact 68 is depressed, the farther transmitter is also activated and initiates the calculation process of the writing tip's coordinates. Contact 68 is maintain closed (i.e., electrically conductive) while writing head 60 moves further into borehole 62.

Fig. 8B schematically illustrates the two states of a pressure-sensitive writing utensil. At the normal state, no pressure is applied (by the user) to the writing head 60, and the distance between the two transmitters 12a and 12b is $L_0$. When the user starts drawing or writing, pressure is applied, and the spring 66 is contracted. This causes a displacement of a distance dz in the location of the lower transmitter 12b, and therefore, the initial distance $L_0$ is shortened to $L_t = L_0 - dz$. If the elastic constant K of the spring 66 is known, the applied (by the user) force F is given by:

$$F = K \cdot dz$$

Since the writing utensil 10 is normally forms a sharp or an obtuse angle with the writing plane 23, the applied force F comprises a tangential component $F_t$ coinciding with X-Y plane, and a radial component $F_r$ coinciding with the central axis. These components can be used to characterize a trace drawn by a particular user and to simulate the change of width of the drawn trace.

The applied force can be sensed by employing a piezoelectric element, to which the force is transferred from the writing tip. The electric signal produced by the piezoelectric element (and corresponds to the applied pressure) is used to modulate the signal that is transmitted from one of the transmission points. The modulated signal is demodulated and the carried information is translated to another signal being indicative to the applied force.

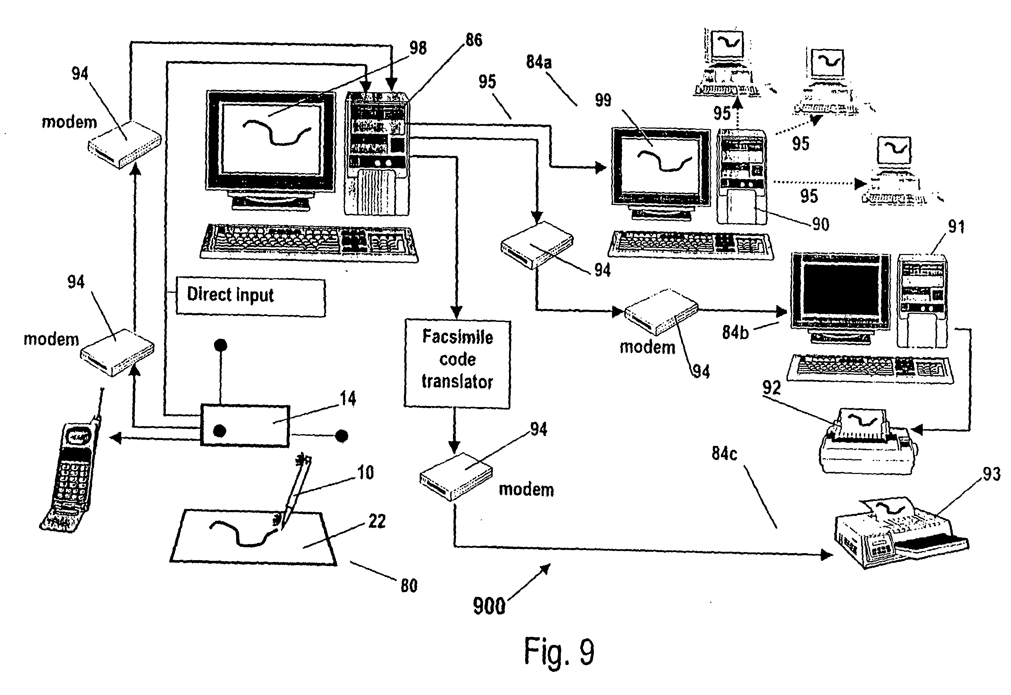

Fig. 9 schematically illustrates a facsimile/E-mail system utilizing a system for digitizing writing and drawing. The facsimile system 900 comprises an input system 80, a computer 86, and a receiving system 84, three types of which, systems 84a - 84c, are illustrated in Fig. 9. The input system 80 is the system for digitizing writing described above. The receiving, system 84a is a computer 90 being linked to a data network 95, the receiving system 84b is a computer 91 communicating with computer 86 via modems 94, and the receiving system 84c is a facsimile machine 93. In order to use the facsimile system, the user writes a facsimile message on a writing medium 22 (e.g., a paper, or any other suitable surface) which is digitized by the input system 80 as a series of different writing tip positions. Data related to the orientation of the writing utensil 10 can also be recorded. The digitized data is transmitted to the appropriate receiving system 84 via the appropriate communication equipment (the modems 94 or the data network 95). Receiving system 84 rasterizes the tip positions and provides the facsimile message to the user. In receiving system 84a, the facsimile message is displayed on a suitable monitor 99. The system 900 including the receiving system 84a can form part of an electronic mail (E-mail) system by which users can send handwritten messages to each other, including signature identification, such as described hereinabove, to identify the user. Typically, if signature identification is desired, the message also comprises the orientation and kinematic information for identification capability of the user.

Using system 84b, the drawn trace is printed out by a printer 92, while using system 84c, the drawn trace is produced by a facsimile system 93. In order to send the digitized drawn trace to system 84c, the message is first provided to a facsimile code translator which rasterizes the message and then converts it to a suitable facsimile code. Although this does not necessarily reduce the transmission time, the input system 80 eliminates the need for scanning (i.e. rasterizing) a handwritten message in order to send the message via facsimile.

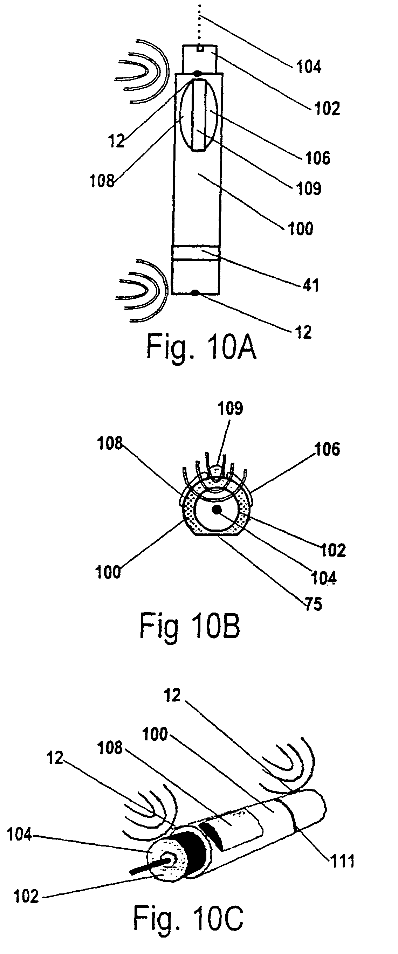

Figs. 10A to 10C schematically illustrate the structure of an input device used as a pointing instrument from different aspects. The input device 100 comprises an illumination device, such as a laser diode 102, producing a beam 104, for illuminating distal points to which the tip is directed. Additionally, the position of the pointer relative to the pointed surface which is calculated by the equation of the line passing through the transmitters is represented as a cursor on the screen display. The input device 100 also comprises control buttons, 106 and 108, simulating mouse buttons, and a transmission control button 109. The control button 109 is operated in combination with an electronic circuit (not shown), so as to generate a pointing beam 104, only when depressed. During this (pointing) period the transmitters 12a and 12b are continuously activated to allow the computation of the intersection point of the line passing through points 12a and 12b with the pointed surface and thereafter simulate the cursor on the display screen. A main switch 111 is used to enable/disable the operation of the input device 100. A depressed button can be identified for example, by modulating the RF pulse emitted from the transmitter.

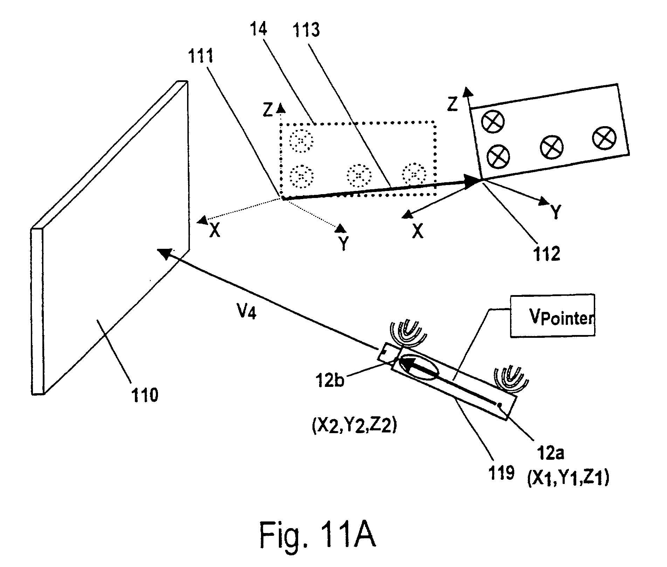

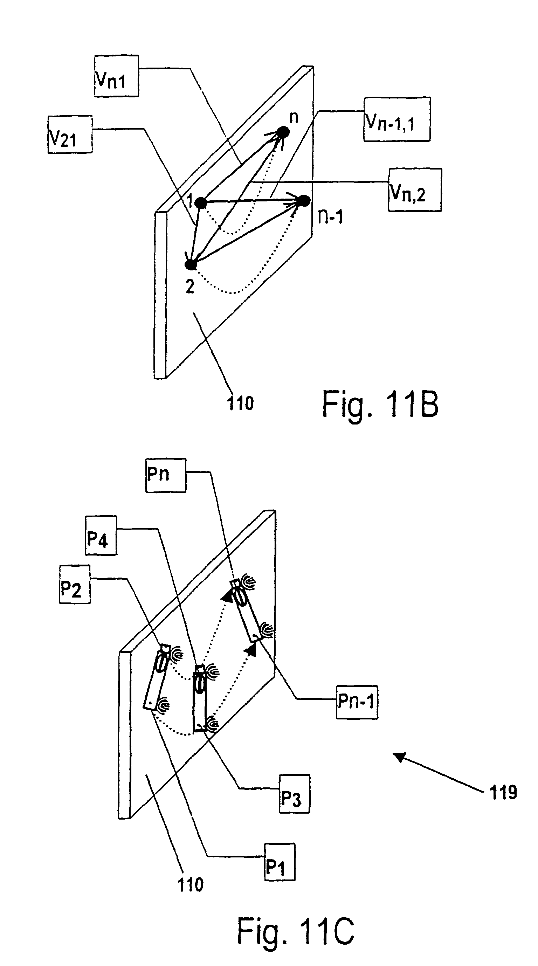

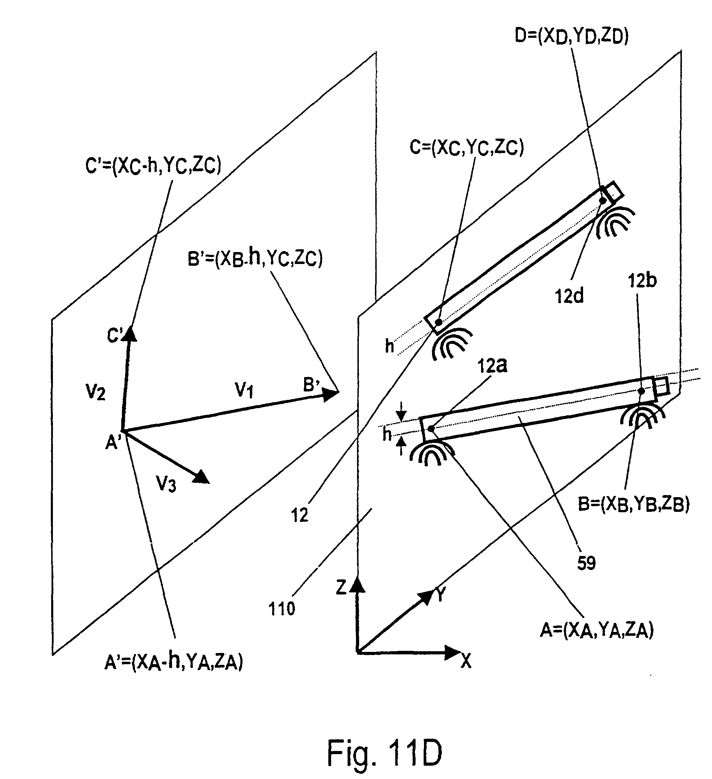

Figs. 11A to 11D schematically illustrate the structure and the operation of an input system for pointing on a surface, according to a preferred embodiment of the invention. The pointing system first determines the location of the surface 110, using the method described hereinabove. The system is brought to a location 111, relatively close to the surface 110, and the input device 119 is placed in at least two different orientations. The measured positions are denoted by the points P1, P2 and P3, as shown in Fig. 11C. Since the transmitters 12a and 12b define a line and since two lines define a plane, the input device 119 can be used to calculate the plane equation of the surface 110. Two planes are shown, the right one with the input device 119 in two locations and the left one showing the vectors of the locations of the transmitters in the two locations. Calibration is carried out by placing the input device 119 in two different orientations on the surface 110 and acquiring the position of each transmitter, 12a and 12b. The first position of each transmitter 12a and 12b is labeled as A and B, respectively, and the second position of each transmitter 12a and 12b is labeled as C and D, respectively. In order to obtain sufficient accuracy in the surface orientation calculation, the body (shown in Fig. 10B) of input device 119 typically has a flat surface (not shown), on which the input device 119 can be attached to surface 110. It is noted that each transmitter 12 is located a distance h above flat surface 75 of the pointing device 119. This is noted in the vectors of Fig. 11D, which give the coordinates of points A' - D' which are the locations of the transmitters 12 if they were on the surface 110.

Since the positions A', B' and C', define a plane, the equation of the plane of the surface 110 can be derived therefrom. First, vectors V1 and V2 (shown in Fig. 11D) are determined as follows:

$$V1 = A'B' = [(XA - XB), (YA - YB), (ZA - ZB)] = [x1,y1,z1] \qquad \text{[Eq. 29]}$$

$$V2 = A'C' = [(XA - XC), (YA - YC), (ZA - ZC)] = [x2,y2,z2] \qquad \text{[Eq. 30]}$$

The vector V3 which is normal to the surface 110, is determined by the cross-product of vectors V1 and V2:

$$V3 = V1 \times V2$$

$$V3= [(y1*z2 - z1*y2),(x1*z2 - z1*x2),(x1*y2 - y1*x2)] = [x3,y3,z3] \qquad \text{[Eq. 31]}$$

The equation of the surface 110 is given by:

$$x3*X + y3*Y + z3*Z + R + h = 0 \qquad \text{[Eq. 32]}$$

where h is the distance between the plane of the transmitters and the plane of surface 110 and the value of R is determined by replacing (X,Y,Z) in equation 32 with the coordinate value $(X_A, Y_A, Z_A)$ of point A. The location (X0,Y0,Z0) of the illuminated point at any time is determined by finding the intersection of the vector or line defined by the current locations (X1,Y1,Z1) and (X2,Y2,Z2) of the transmitters 12a and 12b with the plane described in equation 32. The vector V4 of the input device 119 is given by:

$$V4 = [(X1- X2), (Y1 - Y2), (ZI - Z2)] = [K,L,M] \qquad \text{[Eq. 33]}$$

Since any point on vector V4 represents a scalar distance Q from a known point on the vector, the coordinates of the illuminated point are a function of the coordinates of one of the transmitters 12:

$$
\begin{aligned}
X0 &= X2 + Q*K \\
Y0 &= Y2 + Q*L \qquad\qquad\qquad\qquad \textbf{[Eq. 34]} \\
Z0 &= Z2 + Q*M
\end{aligned}
$$

Since, (X0,Y0,Z0) is a point on the surface 110, equation 34 can be substituted into equation 32, producing the equation:

$$x3*(X2 + Q*K) + y3*(Y2 + Q*K)+ z3*(Z2 + Q*K) + D = 0 \qquad \text{[Eq. 35]}$$

which is one equation with a single unknown variable, Q. After solving equation 35 for Q, equations 13 can be solved, providing the intersection of the vector V4 with the plane, which intersection point is usually the location of the illuminated point.

The position determining apparatus 14 and the input device 119 are then moved to a known location 112 at some distance from the surface 110, marked in Fig. 11A with solid lines. The relationship (distance and orientation) between locations 111 and 112 are either known or measured and are provided to the data processor 16. Using this information, the data processor 16 determines a transformation between the two axis systems, so as to determine the equation of the plane of surface 110 in the frame of reference of the second location 112. The user points (the control button 109 may either be depressed or not depressed) with the input device 119 towards a point on surface 110. The point is lit up by beam 104 (generated by the light source 102). When the desired location or the object is illuminated, the user depresses transmission control buttons 106 or 108 at which point the signals from the transmitters 12a and 12b are transmitted and recorded. Therefore, the input device 119 can function as a mouse.

The position of the illuminated point is determined by the intersection of a vector V4, defined by the two transmitters 12a and 12b, and the plane of the surface 110. The calculations required to determine the position of the illuminated point are provided in Eq. 29 to 35 hereinabove. As long as the area from which the pointer is operated is within the receiving range the set of receivers 18a to 18s, there is no need to move the array of receivers. Otherwise, the array of receivers is moved closer to the area for the purpose of calibration and then the array of receivers is moved close to the user, and the user points toward the writing surface from a distant location.

Looking at Fig. 11B, the equation representing the writing surface is obtained by carrying out calculations which are based on points having known coordinated on that surface. Each pair of points on the surface represents a corresponding vector which coincides with the writing surface. The equation is obtained by performing a vectorial multiplication between adjacent vectors on the surface, as explained with reference to Fig. 11D hereinabove. The accuracy of the representation is increased by performing several vectorial multiplications. Accurate transformation can be obtained by knowing the values of the transforming vector 113, as well as the orientation of the set of receivers in the new location, relative to the previous location, as shown in Fig. 11A.

If prior to computation there is no available information related to the dimensions of the display screen and/ or its location, then during the calibration procedure the pointing device should be directed to the horizontal and to the vertical margins of the display screen (or of the display area). Therefore, if the location of the display screen and the set of receivers is fixed, a single calibration procedure is sufficient. The pointing capabilities can be further expanded to areas external to the displayed area by defining them as objects. Whenever the pointing device is directed to such object, a predetermined operation can be executed by carrying out a clicking operation on buttons in the pointing device. This for example, allows to point on one or more objects projected on a display area (e.g., a wall or a curtain), to select an object and execute an operation associated with the selected object in the computer (the display of which is projected) that can be located farther.

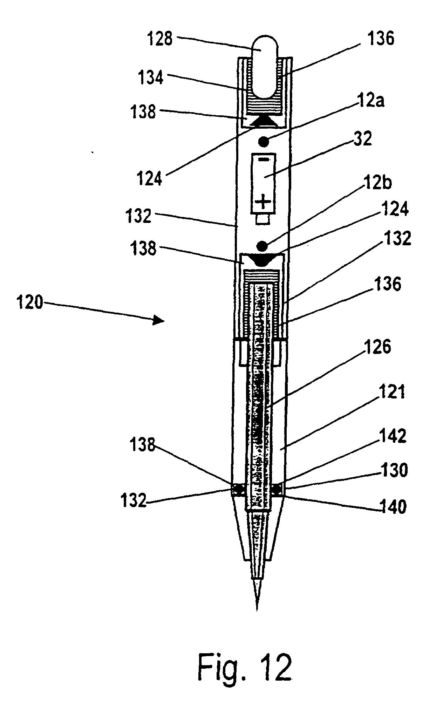

Fig. 12 schematically illustrates the implementation of a writing utensil having erasing capability, which employs a conventional pen or pencil, according to a preferred embodiment of the invention. The writing utensil 120 comprises a housing 121 and micro-switches 122 and 124 which are activated when either a writing element 126 or an eraser 128 are depressed, during writing or erasing, respectively. When one of micros-witches 122 or 124 is activated, it activates both transmitters 12a and 12b. When no writing or erasing operations are carried out, the transmitter 12a or 12b is activated as described hereinabove with reference to Figs.14A to 14C. The writing utensil 120 also comprises mounting elements 130, 132 and 134 for holding the writing element 126 and the eraser 128 within housing 121 while allowing them to move slightly to activate the micro-switches 122 and 124. Element 130 holds the writing element 126 near its writing tip, element 132 holds the writing element 126 near an end and element 134 holds the eraser 128. Each element 130, 132 and 134 is formed of a clamping element 136 held within a small space 138. The space 138 is slightly larger than the clamping element 136, thus allowing it to move slightly and to activate the relevant micro-switch, 122 or 124. The clamping element 136a may consist of a ring 140 and washer 142. The writing element 126 and eraser 128 also held by elements 132 onto which micro-switches 122 and 124 are attached.

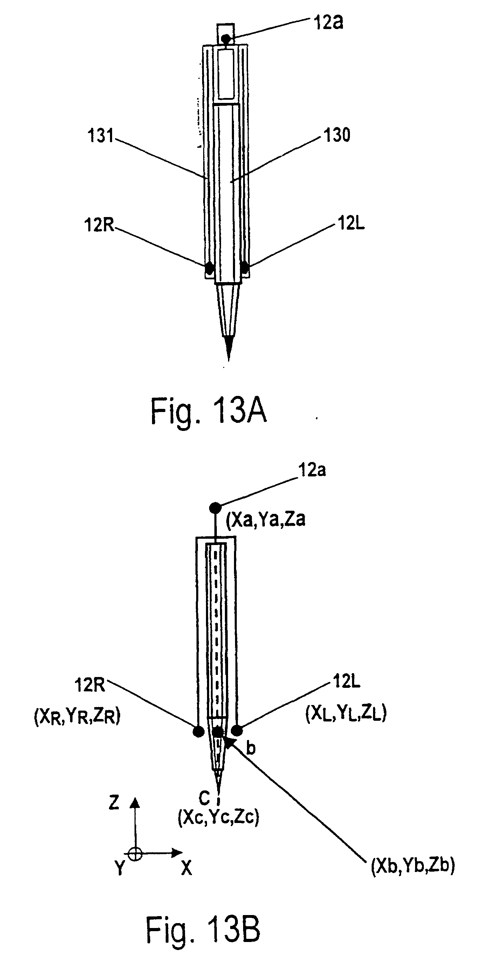

Figs. 13A and 13B schematically illustrate the implementation of a writing utensil having erasing capability, which employs a conventional pen or pencil. In this example, the writing utensil one transmission point 12a which is aligned with the longitudinal axis of the utensil 130, and two additional transmission points 121 and 12r, located at the same plane (which is also perpendicular to the longitudinal axis, as shown in Fig. 13A. The utensil 130 is inserted into a housing 131, which eliminates the option to align an additional transmission point with the longitudinal axis. In this case, a "virtual" transmission point b is simulated by the two transmitters 121 and 12r, and the location of each tip is calculated as described hereinabove for an actual transmission point by using the calculated coordinates of the "virtual" transmission point b. The calculation of each transmission point is shown in Fig. 13B. Assuming that the transmission points 12r and 121 are located symmetrically to the longitudinal axis, the coordinates $(Xb,Yb,Zb)$ of the "virtual" transmission point b are calculated from the coordinates $(Xr,Yr,Zr)$ and $(Xl,Yl,Zl)$ of the transmission points $r$ and $l$, respectively, as follows:

$$Xb=0.5(Xr+Xl)$$

$$Yb=0.5\,(Yr+Yl)$$

$$Zb=0.5(Zr+Zl)$$

The calibration procedure for obtaining the distance Lbc from the virtual point b to the end point c of the writing tip is described hereinabove with reference to Eqs. 22 to 28.

The above examples and description have of course been provided only for the purpose of illustration, and are not intended to limit the invention in any way. As will be appreciated by the skilled person, the invention can be carried out in a great variety of ways, employing more than one technique from those described above, all without exceeding the scope of the invention.

**Claims**

1. A method for acquiring a spatial graphical representation of one or more intersection points between a straight line and a surface (23) comprising:

   a) in a set of receivers (18a, 18b, 18c) having positions that are not fixed with respect of said surface (23) receiving transmissions from two or more aligned transmission points (12), being in any desired spatial orientation, each of said two or more transmission points being separated from its neighboring transmission point (s) by a first fixed distance, said two or more transmission points lying substantially along said straight line;

   b) processing said signals to determine the spatial coordinates of said two or more transmission points (12);

   c) determining at least one characteristic point (24) being co-linear with said two or more transmission points (12) and separated from at least one of said two or more transmission points by a second fixed distance;

   d) calculating the spatial coordinates of said at least one characteristic point (24) using the spatial coordinates of said two or more transmission points and said second fixed distance;

   e) whenever said straight line and said surface (23) intersect, calculating the spatial coordinates of the said intersection point between said straight line and said surface; and

   f) if said surface (23) is not fixed in location, determining the location of two or more additional transmission points (18d, 18e) on said surface (23) and mapping said surface (23) two or more by calculation based on said location of said additional transmission points.

2. A method according to claim 1, further comprising determining spatial and/or planar position of a point lying on a surface comprising positioning two or more transmitters substantially along a straight line passing through the point, the position of which it is desired to determine, determining the position of said transmitters with respect to a plurality of receivers the position of which is fixed in space independently of said surface, and calculating the position of said point using the position of said two or more transmitters, the distance between them and the distance between said point and one of the transmitters.

3. A method according to claim 1, further comprising displaying, on a graphical representation of said surface, a first graphical representation indicating coincidence between said intersect point and said characteristic point, and a second and different graphical representation indicating lack of coincidence.

4. A method according to claim 1, wherein each characteristic point represents the location of a tip of an elongated instrument, the longitudinal axis of which essentially coincides with the calculated straight line.

5. A method according to claim 4, wherein whenever there is coincidence between the intersect point and the characteristic point, the instrument is used as a utensil by exploiting the tip for writing/drawing on the surface, a trace being reproduced on a display and/or in a data storage means by the graphical representation according to the relative movement between said tip and said surface.

6. A method according to claim 4, wherein whenever there is coincidence between the intersection point and the characteristic point, the instrument is used as a utensil by exploiting the tip for erasing from the surface, a portion of a drawn trace which is reproduced on a display and/or in a data storage means by the graphical representation, by removing a corresponding portion from said graphical representation according to the relative movement between said tip and said surface.

7. A method according to claims 4 and 5, wherein whenever there is coincidence between the intersection point and the characteristic point, the instrument is used as a utensil by exploiting a combination of a writing/drawing tip at one end of said utensil, and an erasing tip at the opposing end of said utensil.

8. A method according to claim 4, wherein whenever there is no coincidence between the intersection point and the characteristic point, the instrument is used as a pointer by exploiting the proximal tip for pointing on the surface towards the intersection point, and reproducing said intersection point on a display of said surface by a corresponding graphical representation.

9. A method according to claim 4, further comprising directing a light beam from the proximal tip towards the intersection point, while pointing.

10. A method according to claim 1, wherein each transmission point contains a transmitter.

11. A method according to claim 1, wherein each transmission point contains an antenna, into which power is switched from a distal transmitter.

12. A method according to claim 1, wherein the transmitted signal is selected from the following group:

- an RF signal;
- an IR signal;
- an ultrasonic signal.

13. A method according to claim 1, further comprising enabling the movement of the surface and/or the variation of its orientation without affecting the acquired representation by performing the following steps:

a) receiving transmissions from two or more transmission points located on the surface and in any desired spatial orientation;
b) calculating the spatial coordinates of each point on said surface in any location and spatial orientation;
c) obtaining information related to any undesired change in the coordinates of the calculated intersect point caused by relative movement and/or relative change in orientation of said surface; and
d) compensating for said undesired change prior to displaying the graphical representation.

14. A method according to claim 7, wherein discrimination between writing/drawing and erasing operations of the utensil is obtained by performing the following steps:

a) assigning a unique code to the proximal transmission point closest to the writing/drawing tip;
b) assigning a unique code to the distal transmission point closest to the erasing tip;
c) receiving said codes from said proximal and distal transmission points and calculating their spatial coordinates;
d) operating said utensil in its writing/drawing mode whenever the tip closer to said proximal transmission point coincides with the surface; and
e) operating said utensil in its erasing mode whenever the tip closer to said distal transmission point coincides with the surface.

15. A method according to claim 8, further comprising:

a) pointing toward the surface with the proximal tip or with the distal tip, so that the displayed graphical representation of the intersection point coincides with another displayed graphical representation, said another displayed graphical representation being the representation of an object;
b) while keeping said proximal tip or said distal tip directed to said intersection point, emitting a predetermined characteristic signal from one or more transmission point; and
c) receiving said characteristic signal in the set of receivers and in response, selecting said displayed object.

16. A method according to claim 15, Further comprising manipulating the graphical representation of the selected object by changing the intersection point.

17. A method according to claim 16, wherein the manipulation comprises mouse operations.

18. A method according to claim 16, wherein the manipulation comprises executing a program linked to the selected object.

19. A method according to claim 13, wherein the spatial coordinates of the intersection point are obtained by calculating the scalar product between a first vector, extending from a selected transmission point on the surface to another transmission point on said surface, and a second vector extending from said selected transmission point on the surface to said intersection point.

20. A method according to claim 1, wherein the spatial coordinates of the intersect point are obtained by performing the following steps:

a) calculating the projections of the first and of the second fixed distances on a first selected two dimensional plane and obtaining a coordinate which corresponds to one dimension of said first selected plane; and

b) calculating the projections of the first and of the second fixed distances on a second selected two dimensional plane and obtaining the two remaining coordinates which correspond to the dimensions of said second selected plane.

**21.** A method according to claim 1, wherein the data received by the set of receivers is processed and/or displayed at a remote station, linked to said set of receivers via a data link.

**22.** A method according to claim 20, wherein the remote-station is selected from the following group:

- a fax machine;
- a computer;
- a cellular phone.

**23.** A method according to claim 21, wherein the data is transferred through the data link is over a telephone line and/or a cellular phone system.

**24.** A method according to claim 21, wherein the data is transferred through the data link via an E-mail system.

**25.** A method according to claim 5, further comprising characterizing the handwriting of a specific user operating the writing/drawing utensil, by performing the following steps:

a) enabling the tip to move along the axis which coincides with the calculated straight line, so that the displacement of said tip corresponds to the force applied by said specific user, against the drawing surface;
b) calculating in real-time, the coordinates of the characteristic point while writing/drawing on said drawing surface; and
c) characterizing said specific user by collecting information related to the force applied by said specific user and/or the angle that is formed between the utensil and said drawing surface, while said specific user is writing/drawing.

**26.** A method according to claim 25, further comprising characterizing said specific user by collecting information related to the kinematic attributes of the utensil while said specific user is writing/drawing.

**27.** A method according to claim 1, wherein at least one graphical representation is a 3-D representation.

**28.** A method according to claim 1 or 13, wherein the surface further comprises a calibration point for improving the accuracy of the graphical representation, the coordinates of which are known.

**29.** A method according to claim 1, wherein at least one of the aligned transmission points is a virtual point represented by at least two transmission points which are not aligned, calculating the spatial coordinates of said virtual point by receiving signals transmitted from said at least two transmission points by the set of receivers, and processing said signal.

**30.** A method according to claim 5 or 6, comprising calibrating the location of the tip by performing the following steps:

a) locating at least three transmitters at three different transmission points along the utensil;
b) locating the tip of said utensil at a predetermined calibration point, the spatial coordinates of which are known;
c) calculating the distance of each transmission point from said calibration point by using the received signal from each transmitter; and
d) calculating the spatial coordinates of said tip using the calculated distance of each transmission point, from said calibration point.

**Patentansprüche**

**1.** Verfahren zur Erlangung einer räumlichen graphischen Darstellung eines Schnittpunktes oder einer Mehrzahl von Schnittpunkten zwischen einer Geraden und einer Fläche (23), umfassend:

a) in einem Satz von Empfängern (18a, 18b, 18c), deren Positionen in Bezug auf die besagte Fläche (23) nicht fest ist: Empfangen von Übertragungen von zwei oder mehr ausgerichteten Übertragungspunkten (12), welche eine beliebige räumliche Ausrichtung aufweisen, wobei jeder der besagten zwei oder mehr Übertragungspunkte von seinem/n benachbarten Übertragungspunkt(en) durch einen ersten, festen Abstand getrennt ist und die besagten zwei oder mehr Übertragungspunkte im wesentlich entlang der besagten Geraden liegen;

b) Verarbeiten der besagten Signale, um die räumlichen Koordinaten der besagten zwei oder mehr Übertragungspunkte (12) zu bestimmen;

c) Bestimmen wenigstens eines charakteristischen Punktes (24), der mit den besagten zwei oder mehr Übertragungspunkten (12) kolinear und von wenigstens einem der besagten zwei oder mehr Übertragungspunkte durch einen zweiten, festen Abstand getrennt ist;

d) Berechnen der räumlichen Koordinaten des besagten wenigstens einen charakteristischen Punktes (24) unter Verwendung der räumlichen Koordinaten der besagten zwei oder mehr Übertragungspunkte und des besagten zweiten festen Abstandes;

e) wann immer sich die besagte Gerade und die besagte Fläche (23) schneiden: Berechnen der räumlichen Koordinaten des besagten Schnittpunktes zwischen der besagten Geraden und der besagten Fläche; und

f) falls die Lage der besagten Fläche (23) nicht fest ist: Bestimmen der Lage von zwei oder mehr zusätzlichen Übertragungspunkten (18d, 18e) auf der besagten Fläche und speicherkonforme Bildschirmanzeige der besagten Fläche (23) durch Berechnen auf Basis der besagten Lage der zusätzlichen zwei oder mehr Übertragungspunkte.

2. Verfahren nach Anspruch 1, weiterhin umfassend die Bestimmung der räumlichen und/oder planaren Position eines auf einer Fläche liegenden Punktes, umfassend die Positionierung von zwei oder mehr Transmittern im Wesentlichen entlang einer Geraden, welche durch den Punkt, dessen Position bestimmt werden soll, verläuft, Bestimmen der Position der besagten Transmitter in Bezug auf eine Mehrzahl von Empfängern, deren Position im Raum unabhängig von der besagten Fläche fest ist, und Berechnen der Position des besagten Punktes unter Verwendung der Position der besagten zwei oder mehr Transmitter, des Abstandes zwischen ihnen und des Abstandes zwischen dem besagten Punkt und einem der Transmitter.

3. Verfahren nach Anspruch 1, weiterhin umfassend das Anzeigen - auf einer graphischen Darstellung der besagten Fläche - einer ersten graphischen Darstellung, welche das Zusammenfallen von besagtem Schnittpunkt und besagtem charakteristischen Punkt anzeigt, und einer zweiten, unterschiedlichen graphischen Darstellung, welche das Nichtzusammenfallen anzeigt.

4. Verfahren nach Anspruch 1, bei dem jeder charakteristische Punkt die Lage einer Spitze eines länglichen Instrumentes repräsentiert, dessen Achse im wesentlichen mit der berechneten Geraden zusammenfällt.

5. Verfahren nach Anspruch 4, bei dem immer dann, wenn der Schnittpunkt und der charakteristische Punkt zusammenfallen, das Instrument als ein Utensil eingesetzt wird, indem die Spitze zum Schreiben/Zeichnen auf der Fläche verwendet wird, wobei durch die graphische Darstellung eine Spur auf einem Display und/oder in einem Datenspeichermittel entsprechend der relativen Bewegung zwischen der besagten Spitze und der besagten Fläche wiedergegeben wird.

6. Verfahren nach Anspruch 4, bei dem immer dann, wenn der Schnittpunkt und der charakteristische Punkt zusammenfallen, das Instrument als ein Utensil eingesetzt wird, indem die Spitze zum Auslöschen eines Teils einer durch die graphische Darstellung auf einem Display und/oder in einem Datenspeichermittel wiedergegebenen gezeichneten Spur von der Fläche verwendet wird, und zwar durch Entfernen eines entsprechenden Teils der graphischen Darstellung entsprechend der relativen Bewegung zwischen der besagten Spitze und der besagten Fläche.

7. Verfahren nach Ansprüchen 4 und 5, bei dem immer dann, wenn der Schnittpunkt und der charakteristische Punkt zusammenfallen, das Instrument als ein Utensil eingesetzt wird, indem eine Kombination aus Schreib-/Zeichenspitze an einem Ende des besagten Utensils und einer Löschspitze an dem entgegen gesetzten Ende des Utensils verwendet wird.

8. Verfahren nach Anspruch 4, bei dem immer dann, wenn der Schnittpunkt und der charakteristische Punkt nicht zusammenfallen, das Instrument als ein Zeiger eingesetzt wird, indem die proximale Spitze dazu verwendet wird, auf der Fläche auf den Schnittpunkt zu zeigen, und der Schnittpunkt auf einem Display der besagten Fläche durch eine entsprechende graphische Darstellung wiedergegeben wird.

9. Verfahren nach Anspruch 4, weiterhin umfassend das Richten eines von dem proximalen Ende ausgehenden Lichtstrahls auf den Schnittpunkt, und zwar während des Zeigens.

10. Verfahren nach Anspruch 1, bei dem jeder Übertragungspunkt einen Transmitter aufweist.

11. Verfahren nach Anspruch 1, bei dem jeder Übertragungspunkt eine Antenne aufweist, in die Strom von einem distalen Transmitter geschaltet wird.

12. Verfahren nach Anspruch 1, bei dem das übertragene Signal aus der folgenden Gruppe ausgewählt wird:

- ein RF-Signal,
- ein IR-Signal,
- ein Ultraschallsignal.

13. Verfahren nach Anspruch 1, weiterhin umfassend die Ermöglichung einer Bewegung der Fläche und/oder der variierung ihrer Ausrichtung, ohne die erlangte Darstellung zu beeinträchtigen, und zwar durch Ausführen der folgenden Schritte:

a) Empfangen von Übertragungen von zwei oder mehr Übertragungspunkten, die auf der Fläche und in jeder beliebigen räumlichen Ausrichtung angeordnet sind;
b) Berechnen der räumlichen Koordinaten jedes Punktes auf der besagten Fläche in jeglicher Lage und räumlicher Ausrichtung;
c) Erlangung von Informationen bezüglich jeglicher unerwünschter Veränderung in den Koordinaten des berechneten Schnittpunktes, die durch eine relative Bewegung und/oder eine relative Veränderung in der Ausrichtung der besagten Fläche hervorgerufen wird; und
d) Ausgleichen der unerwünschten Veränderung vor der Anzeige der graphischen Darstellung.

14. Verfahren nach Anspruch 7, bei dem die Unterscheidung zwischen Schreib-/Zeichen- und Löschoperationen des Utensils durch die folgenden Schritte erfolgt:

a) dem proximalen Übertragungspunkt, der sich der Schreib-/Zeichenspitze am nächsten befindet, einen eindeutigen Code zuordnen;
b) dem distalen Übertragungspunkt, der sich der Löschspitze am nächsten befindet, einen eindeutigen Code zuordnen;
c) Empfangen der besagten Codes von dem besagten proximalen und dem besagten distalen Übertragungspunkt und Berechnen der räumlichen Koordinaten derselben;
d) Bedienen des besagten Utensils in dessen Schreib/Zeichenmodus immer wenn die dem besagten proximalen Übertragungspunkt näher liegende Spitze mit der Fläche zusammenfällt; und
e) Bedienen des besagten Utensils in seinem Löschmodus immer wenn die dem besagten distalen Übertragungspunkt näher liegende Spitze mit der Fläche zusammenfällt.

15. Verfahren nach Anspruch 8, weiterhin umfassend:

a) mit der proximalen Spitze oder mit der distalen Spitze auf die Fläche zeigen, so dass die angezeigte graphische Darstellung des Schnittpunktes mit einer anderen angezeigten graphischen Darstellung zusammenfällt, wobei es sich bei der anderen angezeigten graphischen Darstellung um die Darstellung eines Objektes handelt;
b) während man die besagte proximale Spitze oder die besagte distale Spitze auf den besagten Schnittpunkt gerichtet hält: Senden eines vorbestimmten charakteristischen Signals von einem oder mehr Übertragungspunkten; und
c) Empfangen des besagten charakteristischen Signals in dem Satz von Receivern und Auswählen des dargestellten Objektes als Antwort darauf.

16. Verfahren nach Anspruch 15, weiterhin umfassend das Manipulieren der graphischen Darstellung des ausgewählten Objektes durch Ändern des Schnittpunktes.

17. Verfahren nach Anspruch 16, bei dem die Manipulation Maus-Operationen umfasst.

18. Verfahren nach Anspruch 16, bei dem die Manipulation das Ausführen eines mit dem ausgewählten Objekt verknüpften Programms umfasst.

19. Verfahren nach Anspruch 13, bei dem die räumlichen Koordinaten des Schnittpunktes erhalten werden durch Berechnen des Skalarproduktes aus einem ersten Vektor, der sich von einem gewählten Übertragungspunkt auf der Fläche zu einem anderen Übertragungspunkt auf der besagten Fläche erstreckt, und einem zweiten Vektor, der sich von dem besagten ausgewählten Übertragungspunkt auf der Fläche zu dem besagten Schnittpunkt erstreckt.

20. verfahren nach Anspruch 1, bei der die räumlichen Koordinaten des Schnittpunktes durch Ausführen der folgenden Schritte erhalten werden:

a) Berechnen der Projektionen des ersten und des zweiten festen Abstandes auf einer ersten ausgewählten zweidimensionalen Ebene und Erhalten einer Koordinate, die einer Dimension der besagten ersten ausgewählten Ebene entspricht; und
b) Berechnen der Projektionen des ersten und des zweiten festen Abstandes auf einer zweiten ausgewählten zweidimensionalen Ebene und Erhalten der zwei verbleibenden Koordinaten, welche den Dimensionen der besagten zweiten ausgewählten Ebene entsprechen.

21. Verfahren nach Anspruch 1, bei dem die von dem Satz Receiver empfangenen Daten in einer Fern-Station verarbeitet und/oder angezeigt werden, welche mit dem besagten Satz Receiver über eine Datenübertragungsstrecke verbunden ist.

22. Verfahren nach Anspruch 20, bei dem die Fern-Station aus der folgenden Gruppe ausgewählt ist:

- ein Faxgerät;
- ein Computer;
- ein Zellulartelephon.

23. Verfahren nach Anspruch 21, bei dem die Daten durch die Datenübertragungsstrecke über eine Telefonleitung und/oder ein Zellulartelefonsystem übermittelt werden.

24. Verfahren nach Anspruch 21, bei dem die Daten durch die Datenübertragungsstrecke über ein E-mail-System übermittelt werden.

25. Verfahren nach Anspruch 5, weiterhin umfassend die Charakterisierung der Handschrift eines spezifischen, das Schreib-/Zeichen-Utensil bedienenden Anwenders durch Ausführen der folgenden Schritte:

a) Ermöglichen, dass sich die Spitze entlang der Achse bewegt, die mit der berechneten Geraden zusammenfällt, so dass die Verlagerung der besagten Spitze der Kraft entspricht, die der besagte spezifische Anwender auf die Zeichenfläche ausübt;
b) Berechnen, in Echtzeit, der Koordinaten des charakteristischen Punktes während des Schreibens/Zeichnens auf der Zeichenfläche; und
c) Charakterisieren des besagten spezifischen Anwenders durch Sammeln von Informationen bezüglich der von dem besagten spezifischen Anwender angewandten Kraft und/oder des Winkels, der zwischen dem Utensil und der Zeichenfläche gebildet wird, während der spezifische Anwender schreibt/zeichnet.

26. Verfahren nach Anspruch 25, weiterhin umfassend die Charakterisierung des besagten spezifischen Anwenders durch Sammeln von Informationen bezüglich der kinematischen Eigenschaften des Utensils, während der spezifische Anwender schreibt/zeichnet.

27. Verfahren nach Anspruch 1, bei dem wenigstens eine graphische Darstellung eine Drei-D-Darstellung ist.

28. Verfahren nach Anspruch 1 oder 13, bei dem die Fläche weiterhin einen Kalibrierpunkt, dessen Koordinaten bekannt sind, umfasst, um die Genauigkeit der graphischen Darstellung zu verbessern.

29. Verfahren nach Anspruch 1, bei dem wenigstens einer der ausgerichteten Übertragungspunkte ein virtueller Punkt ist, der durch wenigstens zwei nicht ausgerichtete Übertragungspunkte repräsentiert wird, und die räumlichen Koordinaten des virtuellen Punktes dadurch berechnet werden, dass der Satz Receiver von den besagten wenigstens zwei Übertragungspunkten übertragene Signale empfängt und diese Signale verarbeitet werden.

30. Verfahren nach Anspruch 5 oder 6, umfassend die Kalibrierung der Lage der Spitze durch Ausführen der folgenden Schritte:

a) Anordnung von wenigstens drei Transmittern an drei verschiedenen Übertragungspunkten entlang des Utensils;

b) Anordnen der Spitze des Utensils an einem vorbestimmten Kalibrierpunkt, dessen räumliche Koordinaten bekannt sind;

c) Berechnen des Abstandes jedes der Übertragungspunkte zu dem besagten Kalibrierpunkt durch Verwendung des empfangenen Signals von jedem der Transmitter; und

d) Berechnen der räumlichen Koordinaten der besagten Spitze unter Verwendung des berechneten Abstandes jedes Übertragungspunktes zu dem besagten Kalibrierpunkt.

## Revendications

1. Procédé pour acquérir une représentation graphique spatiale d'un ou de plusieurs points d'intersection entre une ligne droite et une surface (23) comprenant :

a) dans un ensemble de récepteurs (18a, 18b, 18c) ayant des positions qui ne sont pas fixes par rapport à ladite surface (23), la réception des transmissions provenant de deux ou plus points de transmission (12) alignés, dans n'importe quelle orientation spatiale souhaitée, chacun desdits deux ou plus points de transmission étant séparé(s) de son ou ses point(s) de transmission voisins par une première distance fixe, lesdits deux ou plus points de transmission situés substantiellement le long de ladite ligne droite ;

b) le traitement desdits signaux pour déterminer les coordonnées spatiales desdits deux ou plus points de transmission (12) ;

c) la détermination d'au moins un point caractéristique (24) colinéaire avec lesdits deux ou plus points de transmission (12) et séparé d'au moins un desdits deux ou plus points de transmission par une deuxième distance fixe ;

d) le calcul des coordonnées spatiales dudit au moins un point caractéristique (24) en utilisant les coordonnées spatiales desdits deux ou plus points de transmission et ladite deuxième distance fixe ;

e) chaque fois que ladite ligne droite coupe ladite surface (23), le calcul des coordonnées spatiales dudit point d'intersection entre ladite ligne droite et ladite surface ; et

f) si l'emplacement de ladite surface (23) n'est pas fixe, la détermination de l'emplacement des deux ou plus points de transmission supplémentaires (18d, 18e) sur ladite surface (23) et l'établissement d'une représentation de ladite surface (23) par le calcul en se basant sur ledit emplacement desdits deux ou plus points de transmission supplémentaires.

2. Procédé selon la revendication 1, comprenant de plus la détermination de la position spatiale et/ou plane d'un point se trouvant sur une surface comportant le positionnement de deux ou plus transmetteurs situés substantiellement le long d'une ligne droite passant par le point, dont on désire déterminer la position, la détermination de la position desdits transmetteurs par rapport à une pluralité de récepteurs dont la position est fixe dans l'espace indépendamment de ladite surface et le calcul de la position dudit point en utilisant la position desdits deux ou plus transmetteurs, la distance qui les sépare et la distance entre ledit point et un des transmetteurs.

3. Procédé selon la revendication 1, comprenant de plus l'affichage, sur une représentation graphique de ladite surface, d'une première représentation graphique indiquant la coïncidence entre ledit point d'intersection et ledit point caractéristique et d'une deuxième représentation graphique différente indiquant une absence de coïncidence.

4. Procédé selon la revendication 1, dans lequel chaque point caractéristique représente l'emplacement d'une extrémité d'un instrument de forme allongée, dont l'axe longitudinal coïncide essentiellement avec la ligne droite calculée.

5. Procédé selon la revendication 4, dans lequel chaque fois que le point d'intersection et le point caractéristique coïncident, l'instrument est utilisé comme un ustensile en utilisant l'extrémité pour écrire et dessiner sur la surface, une trace étant reproduite sur un afficheur et/ou dans un moyen de stockage de données par la représentation graphique selon le mouvement relatif entre ladite extrémité et ladite surface.

**6.** Procédé selon la revendication 4, dans lequel chaque fois que le point d'intersection et le point caractéristique coïncident, l'instrument est utilisé comme un ustensile en utilisant l'extrémité pour effacer de la surface une partie d'une trace dessinée qui est reproduite sur un afficheur et/ou dans un moyen de stockage de données par la représentation graphique, en retirant la partie correspondante de ladite représentation graphique en fonction du mouvement de ladite extrémité par rapport à ladite surface.

**7.** Procédé selon les revendications 4 et 5, dans lequel chaque fois que le point d'intersection et le point caractéristique coïncident, l'instrument est utilisé comme un ustensile en utilisant une combinaison de l'extrémité pour écrire et dessiner d'un côté dudit ustensile et de l'extrémité pour effacer du côté opposé de l'ustensile.

**8.** Procédé selon la revendication 4, dans lequel chaque fois que le point d'intersection et le point caractéristique ne coïncident pas, l'instrument est utilisé comme un pointeur en utilisant l'extrémité proximale pour pointer sur la surface vers le point d'intersection et reproduisant ledit point d'intersection sur un afficheur de ladite surface par une représentation graphique correspondante.

**9.** Procédé selon la revendication 4, comprenant de plus l'orientation d'un faisceau lumineux de l'extrémité proximale vers le point d'intersection, pendant le pointage.

**10.** Procédé selon la revendication 1, dans lequel chaque point de transmission contient un transmetteur.

**11.** Procédé selon la revendication 1, dans lequel chaque point de transmission contient une antenne, dans laquelle la puissance est commutée depuis un transmetteur distal.

**12.** Procédé selon la revendication 1, dans lequel le signal transmis est sélectionné dans le groupe suivant :

- un signal radiofréquence (RF) ;
- un signal infrarouge (IR) ;
- un signal ultrasonique.

**13.** Procédé selon la revendication 1, comprenant de plus la possibilité de mouvement de la surface et/ou de changement de son orientation sans perturber la représentation acquise en réalisant les étapes suivantes :

a) recevoir des transmissions depuis deux ou plus points de transmission situés sur la surface et dans n'importe quelle orientation spatiale souhaitée ;
b) calculer les coordonnées spatiales de chaque point sur ladite surface dans n'importe quel emplacement et orientation spatiale ;
c) obtenir des informations relatives à n'importe quel changement non souhaité des coordonnées du point d'intersection calculé causé par le mouvement relatif et/ou le changement relatif d'orientation de ladite surface ; et
d) compenser ledit changement non souhaité avant d'afficher la représentation graphique.

**14.** Procédé selon la revendication 7, dans lequel la distinction entre les opérations d'écriture et de dessin et les opérations d'effacement de l'ustensile est obtenue en réalisant les étapes suivantes :

a) attribuer un code unique au point de transmission proximal le plus proche de l'extrémité pour écrire et dessiner ;
b) attribuer un code unique au point de transmission distal le plus proche de l'extrémité pour effacer ;
c) recevoir lesdits codes desdits points de transmission proximal et distal et calculer leurs coordonnées spatiales ;
d) faire fonctionner ledit ustensile en mode écriture et dessin chaque fois que l'extrémité la plus proche dudit point de transmission proximal et la surface coïncident ; et
e) faire fonctionner ledit ustensile en mode effacement chaque fois que l'extrémité la plus proche dudit point de transmission distal et la surface coïncident.

**15.** Procédé selon la revendication 8, comprenant de plus:

a) le pointage vers la surface avec l'extrémité proximale ou avec l'extrémité distale, de sorte que la représentation graphique affichée du point d'intersection coïncide avec une autre représentation graphique affichée, ladite autre représentation graphique affichée étant la représentation d'un objet ;

b) tout en gardant ladite extrémité proximale ou ladite extrémité distale dirigée vers ledit point d'intersection, la transmission d'un signal caractéristique prédéterminé depuis un ou plusieurs points de transmission ; et

c) la réception dudit signal caractéristique dans l'ensemble de récepteurs et, en réponse, la sélection de l'objet affiché.

16. Procédé selon la revendication 15, comprenant de plus la manipulation de la représentation graphique de l'objet sélectionné en changeant le point d'intersection.

17. Procédé selon la revendication 16, dans lequel la manipulation comprend le fonctionnement d'une souris.

18. Procédé selon la revendication 16, dans lequel la manipulation comprend l'exécution d'un programme lié à l'objet sélectionné.

19. Procédé selon la revendication 13, dans lequel les coordonnées spatiales du point d'intersection sont obtenues en calculant le produit scalaire d'un premier vecteur, s'étendant d'un point de transmission sélectionné sur la surface jusqu'à un autre point de transmission sur ladite surface, et d'un deuxième vecteur s'étendant dudit point de transmission sélectionné sur la surface jusqu'audit point d'intersection.

20. Procédé selon la revendication 1, dans lequel les coordonnées spatiales du point d'intersection sont obtenues en réalisant les étapes suivantes :

a) calculer les projections de la première et de la deuxième distances fixes sur un premier plan en deux dimensions sélectionné et obtenir une coordonnée qui correspond à une dimension dudit premier plan sélectionné; et

b) calculer les projections de la première et de la deuxième distances fixes sur un deuxième plan en deux dimensions sélectionné et obtenir les deux coordonnées restantes qui correspondent aux dimensions dudit deuxième plan sélectionné.

21. Procédé selon la revendication 1, dans lequel les données reçues par l'ensemble de récepteurs sont traitées et/ou affichées sur une station distante, liée audit ensemble de récepteurs par l'intermédiaire d'une liaison de données.

22. Procédé selon la revendication 20, dans lequel la station distante est sélectionnée dans le groupe suivant :

- un télécopieur ;
- un ordinateur ;
- un téléphone cellulaire.

23. Procédé selon la revendication 21, dans lequel les données sont transférées par la liaison de données sur une ligne téléphonique et/ou un système de téléphonie cellulaire.

24. Procédé selon la revendication 21, dans lequel les données sont transférées par la liaison de données par l'intermédiaire d'un système de courrier électronique.

25. Procédé selon la revendication 5, comprenant de plus la caractérisation de l'écriture manuscrite d'un utilisateur spécifique utilisant l'ustensile pour écrire/dessiner en réalisant les étapes suivantes :

a) permettre à l'extrémité de se déplacer le long de l'axe qui coïncide avec la ligne droite calculée, de sorte que le déplacement de ladite extrémité corresponde à la force appliquée par ledit utilisateur spécifique contre la surface de dessin ;

b) calculer en temps réel les coordonnées du point caractéristique pendant l'écriture ou le dessin sur ladite surface de dessin ; et

c) caractériser ledit utilisateur spécifique en collectant des informations relatives à la force appliquée par ledit utilisateur spécifique et/ou l'angle qui est formé entre l'ustensile et la surface de dessin, lorsque ledit utilisateur spécifique écrit ou dessine.

26. Procédé selon la revendication 25, comprenant de plus la caractérisation dudit utilisateur spécifique en collectant des informations relatives aux attributs cinématiques de l'ustensile lorsque ledit utilisateur spécifique écrit ou dessine.

27. Procédé selon la revendication 1, dans lequel au moins une représentation graphique est une représentation en trois dimensions.

28. Procédé selon la revendication 1 ou 13, dans lequel la surface comprend de plus un point d'étalonnage, dont on connaît les coordonnées, pour améliorer l'exactitude de la représentation graphique.

29. Procédé selon la revendication 1, dans lequel au moins un des points de transmission alignés est un point virtuel représenté par au moins deux points de transmission qui ne sont pas alignés, calculant les coordonnées spatiales dudit point virtuel en recevant les signaux transmis depuis lesdits au moins deux points de transmission par l'ensemble de récepteurs et traitant ledit signal.

30. Procédé selon la revendication 5 ou 6, comprenant l'étalonnage de l'emplacement de l'extrémité en réalisant les étapes suivantes :

a) localiser au moins trois transmetteurs en trois points de transmission différents le long de l'ustensile ;
b) localiser l'extrémité dudit ustensile en un point d'étalonnage prédéterminé, dont on connaît les coordonnées spatiales ;
c) calculer la distance de chaque point de transmission à partir dudit point d'étalonnage en utilisant le signal reçu de chaque transmetteur ; et
d) calculer les coordonnées spatiales de ladite extrémité en utilisant la distance calculée de chaque point de transmission à partir dudit point d'étalonnage.

Transmitter )))

Receiver ⊗

Fig. 1A

Fig. 1B

Fig. 1c

Fig. 1d

Fig. 1E

Fig. 1F

Fig. 1G

Fig. 1H

Fig. 1I

Fig. 1J

Fig. 1K

START

100k
Yes — Get signal from transmitters ? — No

100L
$Time_{no\ signal} = Time_{no\ signal} + dt$

$Time_{no\ signal} = 0$

100a
Get transmitters positions

100b
Calculate tip position

100m
Yes — $Time_{no\ signal} > MAX(Time_{no\ signal})?$ — No

100c
No — Tip position is in the writing surface limits — Yes

100e
Yes — Tip touches writing surface? — No

Do not show cursor on screen
100d

100f
Show cursor on screen

Pen tilt is less than writing tilt?
100g
No / Yes

100i
Show cursor on screen

Draw the tip trace on screen
100h

100j
Check for agreed movements (click and double click)

Switch off the system power

END

## Fig. 1L

32

Fig. 2

Fig. 3

ABC
abc
Screen
44

Storage
46

Modem
48

16

Filter
42

Calculation
Unit
410

Drawing
Parameter
Determiner
40

$(X_a, Y_a, Z_a)$

$(X_b, Y_b, Z_b)$

20

Signal
processor

18a

$L_{aa}$

$L_{ab}$

$L_{ba}$

$L_{ca}$

$L_{cb}$

18c

18b

$L_{bb}$

18Sync

12a

10

12b

24

26

22

34

EP 1 228 480 B1

# Fig. 4A

Lab

E

12a

a

12b

Lbc

b

Y

Ya

Yb

Yc

X

Xa

Xb

Xc

Z

G

# Fig. 4B

Z

Plane XZ

Za

$L_0 = L_{bc} \cdot Cos(\alpha)$

$\alpha = Sin^{-1}[(Z_a - Z_b)/L_{ab}]$

$L_\beta = L_{ab} \cdot Cos(\alpha)$

$L_{ab}$

Zb

Zc

Xc

Xb

Xa

X

# Fig. 4C

Y

Plane XY

$\beta = Cos^{-1}((X_a - X_b)/L_\beta)$

Ya

$L_\beta$

Yb

Yc

Xc

Xb

Xa

Y

$X_c = X_b - L_0 Cos(\beta)$

$Y_c = Y_b - L_0 Sin(\beta)$

Fig. 5

Fig. 6A

Fig. 6B

Fig. 6C

telephone

cellphone

computer

modem

18a

51

53

18b

55

10

57

58

18c

59

16

70

# Fig. 7

Fig. 8A

Writing utensil
with tip 24
pressed to the
writing surface

Writing utensil
in rest: writing
tip 24 is not
pressed to any
writing surface

Fig. 8B

Fig. 9

Fig. 10A

Fig 10B

Fig. 10C

Fig. 11A

Vn1

V21

n

Vn-1,1

Vn,2

1

n-1

2

110

Fig. 11B

Pn

P4

P2

Pn-1

P3

119

P1

110

Fig. 11C

Fig. 11D

Fig. 12

Fig. 13A

Fig. 13B

Fig. 14A

Fig. 14B

Fig. 14C